(19) Europäisches Patentamt
European Patent Office
Office européen des brevets

(11) EP 1 832 613 B1

(12) **EUROPEAN PATENT SPECIFICATION**

(45) Date of publication and mention of the grant of the patent:
**15.02.2012 Bulletin 2012/07**

(21) Application number: **05820122.9**

(22) Date of filing: **21.12.2005**

(51) Int Cl.:
***C08F 283/12*** (2006.01)
***C08K 5/42*** (2006.01)
***C08L 51/08*** (2006.01)
***C08L 69/00*** (2006.01)
***C08L 101/00*** (2006.01)
***C08F 285/00*** (2006.01)

(86) International application number:
**PCT/JP2005/023477**

(87) International publication number:
**WO 2006/070664 (06.07.2006 Gazette 2006/27)**

(54) **GRAFT COPOLYMER, METHOD FOR PRODUCING SAME AND RESIN COMPOSITION CONTAINING SUCH GRAFT COPOLYMER**

PFROPFCOPOLYMER, HERSTELLUNGSVERFAHREN DAFÜR UND HARZZUSAMMENSETZUNG, DIE EIN DERARTIGES PFROPFCOPOLYMER ENTHÄLT

COPOLYMÈRE GREFFÉ, PROCÉDÉ SERVANT À PRODUIRE CELUI-CI ET COMPOSITION DE RÉSINE CONTENANT UN TEL COPOLYMÈRE GREFFÉ

(84) Designated Contracting States:
**AT BE BG CH CY CZ DE DK EE ES FI FR GB GR HU IE IS IT LI LT LU LV MC NL PL PT RO SE SI SK TR**

(30) Priority: **28.12.2004 JP 2004380804**

(43) Date of publication of application:
**12.09.2007 Bulletin 2007/37**

(73) Proprietor: **Kaneka Corporation**
**Osaka-shi, Osaka 530-8288 (JP)**

(72) Inventors:
- **SAEGUSA, Kazunori**
**Hyogo 6540035 (JP)**
- **TONE, Hiroshi**
**Hyogo 6740092 (JP)**

(74) Representative: **Vossius & Partner**
**Siebertstrasse 4**
**81675 München (DE)**

(56) References cited:
**WO-A1-03/091342**
**WO-A1-2005/080460**
**WO-A1-2005/108450**
**WO-A1-2006/070983**
**JP-A- 10 218 951**
**JP-A- 10 310 616**
**JP-A- 11 189 607**
**US-A1- 2004 162 399**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 832 613 B1

## Description

The present invention relates to a polyorganosiloxane-containing graft copolymer. In further detail, the present invention relates to a polyorganosiloxane-containing graft copolymer comprising a polyorganosiloxane (A) segment, a polymer (C) segment having at least a unit derived from a nitrogen-atom-containing multifunctional monomer (B) having two or more radically polymerizable groups in its molecule, and a polymer (E) segment derived from an ethylenically unsaturated monomer (D) that has a glass transition temperature of 40°C or higher. The present invention also relates to a graft copolymer-containing resin composition containing the graft copolymer.

The demand for resin compositions that are flame retardant and have excellent mechanical properties is large, for example, in the market relating to electric and electronic products, and a high performance is required for the resin compositions.

Recently, with respect to impartation of flame retardancy, phosphorus flame retardants are widely used as a non-halogen flame retardant. However, in addition to the problem of toxicity, the phosphorus flame retardants include many problems to be improved such as the decrease in heat resistance and impact strength of final moldings. Therefore, it is desirable to decrease the amount of use of phosphorus flame retardants, and furthermore, to replace with non-halogen and non-phosphorus flame retardants. As a non-halogen and non-phosphorus flame retardant, use of metallic compounds is proposed. However, use of such metallic compounds in an amount required for obtaining sufficient flame retardancy may also cause the decrease in mechanical properties and the like. Accordingly, even when such metallic compounds are used, the amount must be reduced.

With respect to impartation of mechanical properties, a widely used method is a method of blending a polymer having a low glass transition temperature such as a polyorganosiloxane, a poly(alkyl (meth)acrylate) (having a low glass transition temperature), polybutadiene, or polyisobutylene with a matrix resin such as a thermoplastic resin, a thermosetting resin, or an elastomer to disperse the polymer, thereby improving characteristics such as impact strength and tensile properties. However, since polymers other than polyorganosiloxanes have a problem of degrading flame retardancy of the resin composition produced by adding the polymers, it is often difficult to satisfy both flame retardancy and mechanical properties. When the polymer having a low glass transition temperature is blended in order to overcome the deterioration in mechanical properties due to a flame retardant, the flame retardancy is degraded. And when the amount of the flame retardant is further increased, the mechanical properties deteriorate. Such a problem often occurs.

On the other hand, it is known that polyorganosiloxanes can exhibit an effect of improving low-temperature mechanical properties by utilizing its excellent low-temperature properties particularly when blended with the above matrix resin. Although polyorganosiloxanes themselves are flammable, the heat of combustion thereof is smaller than that of other polymers having low glass transition temperatures such as poly(alkyl (meth)acrylate) (having a low glass transition temperature) and polybutadiene. Consequently, the deterioration in flame retardancy of moldings of resin compositions obtained by blending polyorganosiloxanes is smaller than that by blending other polymers. Furthermore, by making use of specific reactions of polyorganosiloxanes, the flame retardancy itself can be imparted at the same time in some cases.

However, polyorganosiloxanes have low compatibility with general resin components. When polyorganosiloxanes are blended and kneaded with the matrix resin to prepare moldings, it is difficult to disperse finely or homogeneously the polyorganosiloxanes to a satisfactory extent. Therefore, use of a large amount of polyorganosiloxanes frequently causes problems of degradation of the appearance of moldings, delamination resulting in the deterioration in mechanical properties, and the like. Consequently, to overcome the problems, various studies of chemically bonding a resin component that has compatibility with the matrix resin with a polyorganosiloxane component to form a block copolymer or a graft copolymer for use have been made. In particular, graft copolymers prepared by forming a graft bonding between a polyorganosiloxane component and the resin component is advantageous in that, for example, the dispersion of the polyorganosiloxane in the matrix resin can be controlled.

Since the reactivity between a polyorganosiloxane itself and a vinyl monomer constituting the resin component is low, a method of efficiently forming a graft copolymer using a polyorganosiloxane modified with a graft-linking agent unit having a radical polymerizability is known. However, in generally known graft copolymers, the resin component does not always form a graft bonding to the polyorganosiloxane component efficiently and a part of the resin component resides in a free state. When its ratio is high, the dispersion of the polyorganosiloxane component in moldings is degraded and physical properties are not sufficiently exhibited. Thus, problems still remain.

To overcome the problems, a method for improving physical properties such as impact strength of final moldings is disclosed (for example, refer to Japanese Unexamined Patent Publication No. 60-252613). In the method, by selecting a methacryloyloxy group-containing silane unit having a high reactivity with a vinyl monomer constituting the resin component, the vinyl monomer is graft-polymerized with the resulting modified polyorganosiloxane component to obtain a graft copolymer having high grafting efficiency. This graft copolymer is effective for improving impact strength. However, when flame retardancy is desired to be imparted or maintained at the same time, further improvement is required in some cases.

In order to improve flame retardancy, impact strength, and the like by improving the grafting efficiency while the option of graft-linking agent is widely maintained without being limited to specific graft-linking agents, a graft copolymer which is prepared by polymerizing a monomer mainly composed of a multifunctional monomer represented by allyl methacrylate in the presence of modified or unmodified polyorganosiloxane particles, and further polymerizing a vinyl monomer is disclosed (for example, refer to Japanese Unexamined Patent Publication No. 2003-238639).

According to the disclosure, since the grafting efficiency to polyorganosiloxane particles is high in such a graft copolymer, more polyorganosiloxane particles can be introduced in a matrix resin while the dispersion of the particles is ensured even in a small amount of a vinyl monomer used. Consequently, when the resulting graft copolymer is blended with a thermoplastic resin, in particular, a polycarbonate resin, not only impact strength but also flame retardancy is satisfactorily exhibited. However, in order to meet recent market requirements that still require high-level satisfaction of both impact strength and flame retardancy, further improvement has been desired.

EP 1 505 123 A1 discloses a flame-retardant thermoplastic resin composition, which comprises:

> 100 parts by weight of a thermoplastic resin (A), 0.1 to 30 parts by weight of a polyorganosiloxane-containing graft copolymer (B) obtained by polymerizing, in at least one stage, a monomer (B-3) comprising a polyfunctional monomer (B-2) containing at least two polymerizable unsaturated bonds within the molecule thereof, and/or a vinyl monomer (B-4) in the presence of polyorganosiloxane particles (B-1),
> 0.0005 to 5 parts by weight of at least one metal salt (C) selected from the group consisting of alkali metal salts and bivalent or further polyvalent metal salts, and
> 0.05 to 2 parts by weight of a fluororesin (D).

It is a final object of the present invention to provide a resin composition excellent in impact strength at low temperatures, the resin composition having reduced content of halogens and phosphorus, further a non-halogen and non-phosphorus resin composition that is excellent in the balance between flame retardancy and impact strength. Also, it is an object of the present invention to provide a graft copolymer serving as a modifier capable of providing such a resin composition.

The present inventors have conducted extensive studies to resolve the above problems and found that a specific graft copolymer has an excellent effect of improving impact strength without degrading flame retardancy or improving flame retardancy at the same time, and that, by blending the graft copolymer with a resin such as a thermoplastic resin, a resin composition having excellent impact strength can be obtained while flame retardancy is maintained or improved. Consequently, the present invention has been accomplished.

The present invention relates to a polyorganosiloxane-containing graft copolymer obtainable by forming a polymer (C) segment by polymerizing a nitrogen-atom-containing multifunctional monomer (B) having two or more radically polymerizable groups in its molecule alone or as a mixture containing another monomer copolymerizable with the monomer (B), wherein the content of the monomer (B) in the mixture is at least 80 % by weight in at least one stage in the presence of a polyorganosiloxane (A), and further forming a polymer (E) segment by polymerizing an ethylenically unsaturated monomer (D) the homopolymer of which has a glas transition temperature of 40°C or higher, wherein the content of the polyorganosiloxane (A) segment is 65 % by weight or more on the basis of the graft copolymer, wherein the nitrogen-atom-containing monomer (B) is a cyanuric acid derivative and/or an isocyanuric acid derivative, wherein the polymer (E) segment is polymerized by using at least 0.1 % and not more than 2 % by weight of mercaptans as a chain transfer agent based on the ethylenically unsaturated monomer (D), wherein the content of the monomers constituting the polymer (C) segment is 1 to 5 % by weight based on that the total amount of siloxane and monomer units that constitute the copolymer is defined as 100 % by weight, and wherein a component soluble in 2-butanone and insoluble in methanol, which is contained in the graft copolymer, has a weight-average molecular weight of at least 50,000.

A preferred embodiment relates to the above-described graft copolymers, wherein the graft ratio of the graft copolymer is 1.001 to 1.280.

A preferred embodiment relates to any one of the above-described graft copolymers, wherein a component soluble in 2-butanone and insoluble in methanol, which is contained in the graft copolymer, has a reduced viscosity of 0.01 to 0.8 dl/g measured under a condition of an acetone solution of 0.2 g/100 $cm^3$ at 30°C.

A preferred embodiment relates to any one of the above-described graft copolymers, wherein a component soluble in 2-butanone and insoluble in methanol, which is contained in the graft copolymer, has a weight-average molecular weight of 1,000,000 or less, determined by GPC.

The present invention relates to a method for producing a graft copolymer comprising a step of performing a salt coagulation of a latex containing any one of the above-described graft copolymers.

A preferred embodiment relates to the above method for producing a graft copolymer, further comprising a step of washing the graft copolymer after the salt coagulation of the latex containing the graft copolymer.

A preferred embodiment relates to the above method for producing a graft copolymer, further comprising a step of diluting a dispersion liquid containing the graft copolymer after the salt coagulation of the latex containing the

graft copolymer.

The present invention relates to a method for producing a graft copolymer further comprising a step of washing the graft copolymer, and/or adding a divalent or higher-valent metal salt after spray-drying a latex containing any one of the above-described graft copolymers.

The present invention relates to a resin composition containing a graft copolymer, comprising any one of the above-described graft copolymers and at least one selected from the group consisting of a thermoplastic resin, a thermosetting resin, and an elastomer.

A preferred embodiment relates to the above resin composition containing a graft copolymer, wherein the thermoplastic resin is at least one selected from polycarbonate resins; polyester resins; polyestercarbonate resins; polyphenylene ether resins; polyphenylene sulfide resins; polysulfone resins; polyethersulfone resins; polyarylene resins; polyamide resins; polyetherimide resins; polyacetal resins; polyvinyl acetal resins; polyketone resins; polyetherketone resins; polyetheretherketone resins; polyarylketone resins; polyethernitrile resins; liquid crystal resins; polybenzimidazole resins; polyparabanic acid resins; vinyl polymer or copolymer resins each prepared by polymerizing or copolymerizing at least one vinyl monomer selected from the group consisting of aromatic alkenyl compounds, methacrylic esters, acrylic esters, and vinyl cyanide compounds; diene-aromatic alkenyl compound copolymer resins; vinyl cyanide-diene-aromatic alkenyl compound copolymer resins; aromatic alkenyl compound-diene-vinyl cyanide-N-phenylmaleimide copolymer resins; vinyl cyanide-(ethylene-diene-propylene (EPDM))-aromatic alkenyl compound copolymer resins; polyolefins; vinyl chloride resins; and chlorinated vinyl chloride resins.

A preferred embodiment relates to the above resin composition containing a graft copolymer, wherein the thermosetting resin is at least one selected from phenolic resins, epoxy resins, urea resins, melamine resins, polyimide resins, polyamide-imide resins, thermosetting polyester resins, alkyd resins, silicone resins, urethane resins, polyvinylester resins, poly(diallyl phthalate) resins, bismaleimide-triazine resins, furan resins, xylene resins, guanamine resins, maleic resins, and dicyclopentadiene resins.

A preferred embodiment relates to the above resin composition containing a graft copolymer, wherein the elastomer is at least one selected from natural rubbers and synthetic rubbers.

A preferred embodiment relates to the above resin composition containing a graft copolymer, the resin composition comprising an aromatic polycarbonate.

A preferred embodiment relates to the above resin composition containing a graft copolymer, the resin composition further comprising a sulfur-containing organometallic salt.

A preferred embodiment relates to any one of the above-described resin compositions containing a graft copolymer, the resin composition further comprising an antioxidant.

By blending the copolymer of the present invention with a resin such as a thermoplastic resin, a non-halogen and non-phosphorus resin composition having excellent impact strength at low temperatures can be provided while flame retardancy is not degraded or flame retardancy is improved.

Preferred embodiments of the present invention are described but the present invention is not limited to the following description.

A polyorganosiloxane-containing graft copolymer of the present invention includes a polyorganosiloxane (A) segment, a polymer (C) segment having at least a unit derived from a nitrogen-atom-containing multifunctional monomer (B) having two or more radically polymerizable groups in its molecule, and a polymer (E) segment derived from an ethylenically unsaturated monomer (D) that has a glass transition temperature of 40°C or higher, the polymer (E) segment ensuring the compatibility with a resin component as a matrix. For example, the polyorganosiloxane-containing graft copolymer of the present invention can be easily obtained as a graft copolymer by polymerizing a monomer containing the nitrogen-atom-containing multifunctional monomer (B) in at least one stage in the presence of the polyorganosiloxane (A), and then polymerizing the ethylenically unsaturated monomer (D) in at least one stage.

Specific examples of the polyorganosiloxane (A), the polymer (C) having at least a unit derived from a nitrogen-atom-containing multifunctional monomer (B) having two or more radically polymerizable groups in its molecule, and the polymer (E) derived from an ethylenically unsaturated monomer (D) are described.

[Polyorganosiloxane (A)]

A polyorganosiloxane (A) used in the present invention is a component for improving impact strength particularly at low temperatures without degrading flame retardancy. In some cases, the polyorganosiloxane (A) is a component for improving flame retardancy of a resin composition containing the polyorganosiloxane (A) itself. As the polyorganosiloxane (A), polyorganosiloxanes such as polydimethylsiloxane, polymethylphenylsiloxane, and polydimethylsiloxane-diphenylsiloxane copolymers; and polyorganohydrogensiloxanes in which a part of a side chain alkyl group is replaced with a hydrogen atom can be used. Among these, polydimethylsiloxane, polymethylphenylsiloxane, and polydimethylsiloxane-diphenylsiloxane copolymers are preferred in view of imparting flame retardancy. Furthermore, polydimethylsiloxane is most preferred because of economically easy availability.

Use of polymethylphenylsiloxane or polydimethylsiloxane-diphenylsiloxane copolymers may further improve the low-temperature properties. In addition, together with an ethylenically unsaturated monomer (D) described below, when the refractive index of the copolymer of the present invention is set so as to be close to that of a matrix resin, transparency may be imparted to the resulting resin composition. In order to satisfactorily exhibit impact strength and flame retardancy, the polyorganosiloxane (A) preferably has a graft-linking group, more preferably has a plurality of graft-linking groups per molecule at a side chain and/or a molecular terminal, and particularly preferably has graft-linking groups at the side chain.

A method for preparing the polyorganosiloxane (A) is not particularly limited and solution polymerization, suspension polymerization or emulsion polymerization is employed.

An example thereof is a method of polymerizing a cyclic, linear, or branched organosiloxane, preferably a cyclic organosiloxane, with a catalyst such as an acid, an alkali, a salt, or a fluorine compound. The weight-average molecular weight (Mw) of organosiloxane used in the polymerization is preferably not more than 20,000, more preferably not more than 10,000, further preferably not more than 5,000, and particularly preferably not more than 2,500. A more preferred example of the above method is a method of using the above organosiloxane and a silane having a graft-linking group and/or a cyclic, linear, or branched organosiloxane having a graft-linking group and the same weight-average molecular weight (Mw) as that of the above-described organosiloxane. Another more preferred example of the above method is a method, without using the above organosiloxane, of using a silane having a graft-linking group and/or a cyclic, linear, or branched organosiloxane having a graft-linking group and the same weight-average molecular weight (Mw) as that of the above-described organosiloxane.

Alternatively, an example of the method is a method of equilibrating a polyorganosiloxane having a weight-average molecular weight (Mw) of preferably at least 20,000, more preferably at least 50,000, and further preferably at least 100,000 and a silane preferably having a graft-linking group and/or a cyclic, linear, or branched organosiloxane having a graft-linking group in a solution, a slurry, or an emulsion in the presence of the same catalyst as described above. Another example of the method is a method of equilibrating a polyorganosiloxane preferably having a weight-average molecular weight (Mw) of at least 20,000 and a polyorganosiloxane having a graft-linking group and preferably having a weight-average molecular weight (Mw) of at least 20,000 in a solution, a slurry, or an emulsion in the presence of the catalyst as described above.

In order to satisfactorily exhibit the impact strength of final moldings, the polyorganosiloxane (A) is preferably in a particle form. Such particles can be produced from the above-described organosiloxanes by emulsion polymerization. In place of emulsion polymerization, an emulsion of polyorganosiloxane (A) can be obtained by a method of modifying a polyorganosiloxane in an emulsion as described above, or a method of mechanically and forcibly emulsifying a modified or unmodified polyorganosiloxane (A) prepared by solution polymerization with e.g. a high-pressure homogenizer.

In further detail, particles of polyorganosiloxane (A) can be obtained by known emulsion polymerizations described in Japanese Unexamined Patent Publication Nos. 2000-226420 and 2000-834392, U. S. Patent Nos. 2,891,920 and 3,294,725.

Particles of polyorganosiloxane (A) can be obtained by using a cyclic siloxane represented by 1,3,5,7-octamethylcyclotetrasiloxane (D4) and/or a bifunctional silane having a hydrolyzable group, such as dimethyldimethoxysilane; as the occasion demands, a trifunctional or higher functional alkoxysilane such as methyltriethoxysilane or tetrapropyloxysilane, and a condensate of trifunctional or higher functional silane such as methylorthosilicate; and as the need arises, a graft-linking agent such as mercaptopropyldimethoxymethylsilane, acryloyloxypropyldimethoxymethylsilane, methacryloyloxypropyldimethoxymethylsilane, vinyldimethoxymethylsilane, or vinylphenyldimethoxymethylsilane. In order to achieve a satisfactory impact strength of final moldings, the preferred amount of the graft-linking agent is at least 0.03 % by mol, more preferably at least 0.06 % by mol, further preferably at least 0.15 % by mol, and particularly preferably at least 0.5 % by mol, but not more than 5 % by mol, more preferably not more than 3 % by mol, and further preferably not more than 1 % by mol on the basis of siloxane unit in the resulting polyorganosiloxane.

With respect to conditions during polymerization, emulsification is preferably performed with water and a surfactant using a homogenizer, emulsification and dispersion are mechanically performed under high pressure if necessary, subsequently, an acid is added to adjust the condition of the pH to 4 or less, preferably 3 or less, and more preferably 2 or less, or a base is added to adjust the condition of the pH to 8 or more, preferably 9.5 or more, and more preferably 11 or more, thereby obtaining the particles of the polyorganosiloxane (A). The temperature during polymerization may be 0°C or higher, preferably 30°C or higher, more preferably 50°C or higher, and further preferably 60°C or higher, but 150°C or lower, preferably 120°C or lower, and more preferably 95°C or lower. The particles of the polyorganosiloxane (A) can be obtained by performing hydrolysis and condensation reaction preferably under an atmosphere of an inert gas such as nitrogen or a condition deaerated by vacuum.

In polymerizing the above cyclic siloxane and/or silane or the like, seed polymerization described below is preferably used. Examples thereof include a method of using organic polymers disclosed in Japanese Unexamined Patent Publication Nos. 63-202630, 63-202631, and 4-258636 as seed particles and a method of using a latex of polyorganosiloxane disclosed in Japanese Unexamined Patent Publication No. 60-088040 as a seed latex. A more

preferred example thereof is a method of using an organic polymer having a swelling property for a cyclic siloxane as seed particles as disclosed in PCT publication No. WO03/068835. Alternatively, a method of using a polymer having a latex particle size of 20 nm or less, preferably 15 nm or less, and more preferably 10 nm or less as seed particles may be employed.

Emulsions of polyorganosiloxane (A) obtained by the above methods contain volatile low-molecular-weight cyclic siloxanes. In order to remove this volatile low-molecular-weight cyclic siloxane, as disclosed in U. S. Patent No. 4,600,436 and Japanese Unexamined Patent Publication No. 2002-249582, a steam stripping can be employed, alternatively, as disclosed in Japanese Unexamined Patent Publication No. 2002-121284, a method of adding an adsorbent such as diatomaceous earth to adsorb the volatile low-molecular-weight cyclic siloxane, and filtering the resulting polyorganosiloxane (A) can be employed.

As other methods for obtaining the polyorganosiloxane (A) in an emulsion form, methods disclosed in Japanese Unexamined Patent Publication Nos. 11-222554 and 2001-288269 etc. can be employed. Examples of the usable polyorganosiloxane include linear or branched and modified or unmodified (poly)organosiloxanes which contain preferably 5 % by weight or less and more preferably 1 % by weight or less of volatile low-molecular-weight siloxanes, which have a weight-average molecular weight (Mw) of preferably up to 20,000, more preferably up to 10,000, further preferably up to 5,000, and most preferably up to 2,500, which have a hydrolyzable group at an end, and as the occasion demands, which are partially substituted with a radical reactive group such as a mercaptopropyl group, a methacryloyloxypropyl group, an acryloyloxypropyl group, a vinyl group, a vinylphenyl group, or an allyl group. Examples of the hydrolyzable group are a hydroxyl group, an amino group, an alkoxyl group, an acyloxy group, a ketoxime group, an alkenoxy group, an amido group, and aminoxy group.

The modified or unmodified (poly)organosiloxane can be mechanically and forcibly emulsified so as to have a desired particle size, by using a graft-linking agent such as a silane having the above-described radical reactive group if desired, and adding water, a surfactant, with a high-pressure homogenizer or a colloidal mill. The polymerization temperature of the modified or unmodified (poly)organosiloxane is 0°C or higher, preferably 100°C or lower, more preferably 50°C or lower, and further preferably 30°C or lower. The pH is preferably controlled to the same range by the same method as the above-described method of using an acid or a base, thus obtaining the polyorganosiloxane (A). When a (poly)organosiloxane containing a small amount of volatile low-molecular-weight siloxane is used as a starting material, the polyorganosiloxane (A) in which the volatile low-molecular-weight siloxane is reduced can be obtained by selecting polymerization conditions.

In polymerization of the cyclic siloxane and/or silane or the forcible emulsion polymerization of the modified or unmodified (poly)organosiloxane, when an acidic polymerization condition is used, a surfactant that can exhibit the surface activity even under the acidic condition is preferably used. Examples of such a surfactant are anionic surfactants such as metal salts of alkyl sulfuric acid ester, metal salts of alkyl sulfonic acid, and metal salts of alkylaryl sulfonic acid.

As the metal salts, preferably alkali metal salts, and in particular, sodium salts and potassium salts are selected. Among these, sodium salts are preferred and sodium dodecylbenzenesulfonate is most preferred. Nonionic surfactants such as polyoxyalkylene alkyl ether represented by polyoxyethylene dodecyl ether, polyoxyalkylene alkylaryl ether represented by polyoxyethylene nonylphenyl ether, polyoxyalkylene higher fatty acid ester represented by polyoxyethylene stearic acid ester, and sorbitan monolauric acid ester may also be used. These nonionic surfactants and the anionic surfactants may be used together.

Examples of an acid used for producing an acidic condition are inorganic acids such as sulfuric acid, hydrochloric acid, and nitric acid; and organic acids such as dodecylbenzenesulfonic acid, dodecylsulfuric acid, and trifluoroacetic acid. Alkylarylsulfonic acids represented by dodecylbenzenesulfonic acid have functions as not only an acid component but also a surfactant, and are preferably used because it is sufficient to use only an alkylarylsulfonic acid in some cases. However, the acid and the surfactant are not limited thereto. These acids and surfactants may be used alone or in combinations of a plurality of components.

After the completion of polymerization under an acidic condition, according to need, the latex is aged at about room temperature for at least several hours to increase the molecular weight of the polyorganosiloxane. Subsequently, the system is neutralized by adding an inorganic base such as sodium hydroxide, potassium hydroxide, sodium carbonate, or ammonia; or an organic base such as an alkylamine or an alkyl ammonium hydroxide so that the pH is controlled to 5 to 8. Thus, the polymerization of the siloxane can be terminated.

Similarly, when a basic polymerization condition is used, a surfactant that can exhibit the surface activity even under the basic condition is preferably used. Examples of such a surfactant are cationic surfactant such as alkyltrimethylammonium salts such as dodecyltrimethylammonium bromide and stearyltrimethylammonium bromide; dialkyldimethylammonium salts such as didodecyldimethylammonium bromide; and alkylaralkylammonium salt such as stearyldimethylbenzylammonium chloride. As described above, nonionic surfactants may be used or combined. Examples of a base used for producing a basic condition are inorganic bases such as lithium hydroxide, potassium hydroxide, sodium hydroxide, and cesium hydroxide; and organic bases such as an alkyl ammonium hydroxide.

Tetraorganoammonium hydroxides such as cetyltrimethylammonium hydroxide described in Japanese Unexamined Patent Publication No. 2001-106787 have both functions as a cationic surfactant and a base, and are preferably used because it is sufficient to use only a tetraorganoammonium hydroxide in some cases. However, the base and the surfactant are not limited thereto. These bases and surfactants may be used alone or in combinations of a plurality of components. After the completion of polymerization under a basic condition, aging is performed as the need arises. As described above, the polymerization of the siloxane can be terminated by neutralizing the system with an inorganic acid such as sulfuric acid, or an organic acid such as acetic acid or dodecylbenzenesulfonic acid.

The volume-average particle size of particles of the polyorganosiloxane (A) is preferably 0.008 to 0.6 μm and more preferably 0.01 to 0.35 μm. It is often difficult to stably produce particles having a volume-average particle size of less than 0.008 μm. When the volume-average particle size exceeds 0.6 μm, flame retardancy and impact strength of final moldings may be degraded. The volume-average particle size can be measured with a MICROTRAC UPA150 manufactured by NIKKISO Co., Ltd.

The weight-average molecular weight of the polyorganosiloxane (A) used in the present invention is preferably at least 100,000 and more preferably at least 150,000, but preferably not more than 1,000,000, more preferably not more than 700,000, and further preferably not more than 300,000. An excessively low weight-average molecular weight may degrade the flame retardancy and the impact strength. An excessively high weight-average molecular weight may decrease the productivity. An equivalent value to standard polystyrene obtained by gel permeation chromatography (GPC) can be used as the weight-average molecular weight.

In the polyorganosiloxane-containing graft copolymer (the total amount of the copolymer is defined as 100 % by weight) of the present invention, the content of the polyorganosiloxane (A) segment is at least 65 % by weight, preferably at least 75 % by weight, and particularly preferably at least 82.5 % by weight in order not to impair flame retardancy of the resulting resin composition. The upper limit is preferably 99 % by weight, more preferably 98 % by weight, and further preferably 95 % by weight in order that the dispersion of the polyorganosiloxane (A) component in a matrix resin is satisfactory. [Polymer (C) having at least unit derived from nitrogen-atom-containing multifunctional monomer (B)]

In the present invention, by using a nitrogen-atom-containing multifunctional monomer (B) having two or more radically polymerizable groups in its molecule, effects of improving the following properties can be expected.

For example, it is believed that the grafting efficiency to the polyorganosiloxane (A) can be improved in polymerization of an ethylenically unsaturated monomer (D) described below. Thereby, the amount of the ethylenically unsaturated monomer (D) used can be reduced as sufficient as possible, and thus the ratio of the polyorganosiloxane (A) can be relatively increased. As a result, the amount of the ethylenically unsaturated monomer (D), which is a flammable component, used can be reduced, thereby suppressing or improving the problem of degradation of flame retardancy of the resulting resin composition. Furthermore, heat resistance of the polyorganosiloxane copolymer itself can be improved. This is probably because the polymer derived from the nitrogen-atom-containing multifunctional monomer (B) has high heat resistance. In addition, the problem of degrading flame retardancy can be suppressed or improved, compared with the case where a methacrylate-containing multifunctional monomer such as allyl methacrylate or 1,3-butyleneglycol dimethacrylate or a diene such as butadiene or divinylbenzene is used.

The nitrogen-atom-containing multifunctional monomer (B) used in the present invention is a compound having an isocyanuric acid structure such as diallyl isocyanurate, diallyl-n-propyl isocyanurate, triallyl isocyanurate, trimethallyl isocyanurate, and tris((meth)acryloxyethyl) isocyanurate; or a compound having a cyanuric acid structure represented by triallyl cyanurate; and tri(meth)acryloyl hexahydrotriazine. Among these, triallyl isocyanurate and triallyl cyanurate are preferred. Triallyl isocyanurate is most preferably used.

In the present invention, the nitrogen-atom-containing multifunctional monomer (B) may be used as a mixture containing another monomer copolymerizable with the monomer (B). The content of the monomer (B) in the mixture is at least 80 % by weight. Most preferably, the nitrogen-atom-containing multifunctional monomer (B) is used alone in view of exhibiting flame retardancy.

Specific examples of the other monomer copolymerizable with the monomer (B) are the same as specific examples of the ethylenically unsaturated monomer (D) described below. Other usable examples thereof are multifunctional monomers such as divinylbenzene, divinylnaphthalene, divinylanthracene, diisopropenylbenzene, allyl (meth) acrylate, triallyl benzenetricarboxylate, diallyl phthalate, ethylene glycol dimethacrylate, 1,3-butyleneglycol dimethacrylate, 2,2'-divinylbiphenyl, 2,4'-divinylbiphenyl, 3,3'-divinylbiphenyl, 4,4'-divinylbiphenyl, 2,4'-di(2-propenyl)biphenyl, 4,4'-di(2-propenyl)biphenyl, 2,2'-divinyl-4-ethyl-4'-propylbiphenyl, and 3,5,4'-trivinylbiphenyl.

In order to exhibit satisfactory flame retardancy, preferred examples of the other monomer copolymerizable with the monomer (B) are aromatic vinyl monomers such as styrene, α-methylstyrene, vinylnaphthalene, and vinylbiphenyl; vinyl cyanide monomers such as acrylonitrile; alkyl (meth)acrylates each containing an alkyl group having 2 or less carbon atoms, such as methyl methacrylate, ethyl methacrylate, methyl acrylate, and ethyl acrylate; and multifunctional monomers each containing non-condensed multiple aromatic rings such as 2,2'-divinylbiphenyl, 2,4'-divinylbiphenyl, 3,3'-divinylbiphenyl, 4,4'-divinylbiphenyl, 2,4'-di(2-propenyl)biphenyl, 4,4'-di(2-propenyl)biphenyl, 2,2'-divinyl-4-ethyl-4'-propylbiphenyl, and 3,5,4'-trivinylbiphenyl.

Among these, particularly when only a monomer whose homopolymer has a glass transition temperature of 40°C or higher preferably 60°C or higher, and, more preferably 90°C or higher is selected, moldings having satisfactory flame retardancy can be finally obtained. Examples of such a monomer are styrene, α-methylstyrene, vinylnaphthalene, vinylbiphenyl, acrylonitrile, methacrylonitrile, methyl methacrylate, 2,2'-divinylbiphenyl, 2,4'-divinylbiphenyl, 3,3'-divinylbiphenyl, 4,4'-divinylbiphenyl, 2,4'-di(2-propenyl)biphenyl, 4,4'-di(2-propenyl)biphenyl, 2,2'-divinyl-4-ethyl-4'-propylbiphenyl, and 3,5,4'-trivinylbiphenyl.

A polymer (C) can be obtained by polymerizing a monomer or a monomer mixture that contains the nitrogen-atom-containing multifunctional monomer (B) by a known radical polymerization method. When the polyorganosiloxane (A) is obtained in the form of emulsion, polymerization of the monomer containing the nitrogen-atom-containing monomer (B) is preferably performed by emulsion polymerization.

When emulsion polymerization is employed, known polymerization initiators such as 2,2'-azobisisobutyronitrile, hydrogen peroxide, potassium persulfate, and ammonium persulfate can be used as thermally decomposable polymerization initiators. Alternatively, peroxides such as organic peroxides such as tert-butylperoxyisopropyl carbonate, p-menthane hydroperoxide, cumene hydroperoxide, dicumyl peroxide, tert-butyl hydroperoxide, di-tert-butyl peroxide, and tert-hexyl peroxide, and inorganic peroxides such as hydrogen peroxide, potassium persulfate, and ammonium persulfate; if desired, a reducing agent such as sodium formaldehyde sulfoxylate and glucose; according to need, transition metal salts such as iron (II) sulfate; and as the occasion demands, chelating agents such as disodium ethylenediaminetetraacetate; and as the need arises, phosphorus-containing compounds such as sodium pyrophosphate may be combined for using as redox polymerization initiators.

When redox polymerization initiators are used, polymerization can be performed even at a low temperature at which the peroxides are not substantially thermally decomposed. Therefore, preferably, the polymerization temperature can be set in a wide range. Among these, aromatic ring-containing peroxides such as cumene hydroperoxide and dicumyl peroxide are preferably used as redox polymerization initiators. The polymerization initiator, and the reducing agent, the transition metal salt, and the chelating agent that are used as a redox polymerization initiator may be used in amounts in known ranges. In polymerization of a monomer containing the nitrogen-atom-containing multifunctional monomer (B), a known chain transfer agent may be used in a known range. An additional surfactant may also be added in a known range.

Conditions for polymerization, such as the polymerization temperature, the pressure, and the deoxidization may be in known ranges. Polymerization of a monomer containing the nitrogen-atom-containing monomer (B) may be performed in a single stage or two or more stages. For example, a method of adding a monomer containing the nitrogen-atom-containing monomer (B) to an emulsion of the polyorganosiloxane (A) at a time or continuously, or a method of adding an emulsion of the polyorganosiloxane (A) to a reactor previously fed with a monomer containing the nitrogen-atom-containing monomer (B), and then performing polymerization may be appropriately employed.

In the polyorganosiloxane-containing graft copolymer (the total amount of siloxane and monomer units that constitute the copolymer is defined as 100 % by weight) of the present invention, in order not to impair flame retardancy of the resulting resin composition, the content of the polymer (C) segment having at least a unit derived from a nitrogen-atom-containing multifunctional monomer (B) is in the range of 1 to 5 % by weight.

[Polymer (E) derived from ethylenically unsaturated monomer (D)]

An ethylenically unsaturated monomer (D) used in the present invention is a component used for introducing a polymer (E) that ensures the compatibility between the polyorganosiloxane-containing graft copolymer of the present invention and a matrix resin. In order to achieve satisfactory flame retardancy, the glass transition temperature of the polymer (E) obtained by polymerizing the ethylenically unsaturated monomer (D) is preferably 40°C or higher, more preferably 60°C or higher, and particularly preferably 90°C or higher. The ethylenically unsaturated monomer (D) may be polymerized in a single stage or two or more stages. Even when the polymerization is performed in two or more stages, preferably, the monomer composition is prepared so that the glass transition temperature of the polymer satisfies the above range in any of the stages.

Although the ethylenically unsaturated monomer (D) may be a single compound or a mixture containing two or more compounds, the glass transition temperature of the resulting polymer is preferably set as described above. Glass transition temperatures described in "Polymer Handbook" (published by John Wiley & Sons Ltd., 1999, fourth edition) can be used as the glass transition temperature in the present invention. With respect to a copolymer, monomer units contained in a weight fraction of 5% or more in the copolymer are referred to, and a glass transition temperature calculated on the basis of the Fox equation from the glass transition temperature of a homopolymer of each monomer component and the weight fraction can be used.

Specific examples of the monomer used as the ethylenically unsaturated monomer (D) are aromatic vinyl monomers such as styrene, α-methylstyrene, vinylnaphthalene, and vinylbiphenyl; vinyl cyanide monomers such as acrylonitrile; alkyl (meth)acrylates such as methyl acrylate, ethyl acrylate, butyl acrylate, octyl acrylate, 2-ethylhexyl acrylate, lauryl acrylate, stearyl acrylate, benzyl acrylate, methyl methacrylate, ethyl methacrylate, butyl methacrylate,

octyl methacrylate, lauryl methacrylate, myristyl methacrylate, stearyl methacrylate, behenyl methacrylate, and benzyl methacrylate; and (meth)acrylamides such as acrylamide, methacrylamide, dodecyl methacrylamide, cyclododecyl methacrylamide, and adamantyl methacrylamide. In the present invention, unless otherwise stated, for example, the term "(meth)acrylic" means acrylic and/or methacrylic.

Among these, in order to achieve satisfactory flame retardancy, preferred examples of the monomer are aromatic vinyl monomers such as styrene, α-methylstyrene, vinylnaphthalene, and vinylbiphenyl; vinyl cyanide monomers such as acrylonitrile; and alkyl (meth)acrylates each containing an alkyl group having 2 or less carbon atoms, such as methyl methacrylate, ethyl methacrylate, methyl acrylate, and ethyl acrylate. More preferably, when only a monomer whose homopolymer has a glass transition temperature of preferably 40°C or higher, more preferably 60°C or higher, and further preferably 90°C or higher is used, more satisfactory flame retardancy can be achieved. Examples of such a monomer are styrene, α-methylstyrene, vinylnaphthalene, vinylbiphenyl, acrylonitrile, methacrylonitrile, and methyl methacrylate. As the need arises, functional-group-containing vinyl monomers such as carboxyl-group-containing vinyl monomers such as itaconic acid, (meth)acrylic acid, fumaric acid, and maleic acid; sulfonic-group-containing vinyl monomers such as 4-styrenesulfonic acid and 2-acrylamide-2-methylpropanesulfonic acid and their sodium salts, potassium salts, calcium salts, magnesium salts, aluminum salts, organic phosphonium salts, organic sulfonium salts, and organic ammonium salts thereof; epoxy-group-containing vinyl monomers such as glycidyl methacrylate; and hydroxyl-group-containing vinyl monomers such as 2-hydroxyethyl methacrylate and 4-hydroxybutyl acrylate may be combined.

In polymerization of the ethylenically unsaturated monomer (D) a chain transfer agent is used because heat resistance and thermal stability of the resulting polyorganosiloxane copolymer, flame retardancy and impact strength of final moldings may be improved. The chain transfer agent used is a mercaptan such as n-octyl mercaptan, tert-octyl mercaptan, n-dodecyl mercaptan, tert-dodecyl mercaptan, and 2-ethylhexyl thioglycolate. 2-Ethylhexyl thioglycolate is most preferably used because an odorless polyorganosiloxane-containing graft copolymer or resin composition can be obtained.

The amount of the chain transfer agent used based on the ethylenically unsaturated monomer (D) is at least 0.1 % by weight and not more than 2 % by weight.

When the polyorganosiloxane copolymer containing the polyorganosiloxane (A) segment and the polymer (C) segment having at least a unit derived from a nitrogen-atom-containing monomer (B) is obtained in the form of emulsion, polymerization of the ethylenically unsaturated monomer (D) is preferably performed by emulsion polymerization. An example of another preferred usable method is a method (hereinafter referred to as "suspension seed polymerization method") of coexisting a slurry prepared by breaking an emulsion of the polyorganosiloxane copolymer by, for example, salting-out with sodium sulfate, calcium chloride, magnesium sulfate, or the like and the ethylenically unsaturated monomer (D), or alternatively, adding a salt to a mixture containing droplets of the ethylenically unsaturated monomer (D) and an emulsion of the polyorganosiloxane copolymer so as to adsorb the polyorganosiloxane copolymer component on the droplets of the ethylenically unsaturated monomer (D); and then polymerizing the ethylenically unsaturated monomer (D).

Conditions for emulsion polymerization of the ethylenically unsaturated monomer (D), for example, the type of polymerization initiator, the type of surfactant, the amounts of these, the polymerization temperature, the pressure, the deoxidization, and the stirring are the same as those in the case of polymerizing the above-described monomer containing the nitrogen-atom-containing multifunctional monomer (B). When polymerization is performed by suspension seed polymerization, preferably, a thermally decomposable polymerization initiator such as peroxide such as lauroyl peroxide or benzoyl peroxide; or an azo compound such as azobisisobutyronitrile, is previously dissolved in the ethylenically unsaturated monomer (D), a suspension is then generated, and the temperature of the reaction fluid is increased to preferably 60°C or higher, more preferably 70°C or higher, and further preferably 80°C or higher to start polymerization.

In this case, in order to prevent the suspended particles from becoming unstable and coarse, a protective colloidal agent such as polyvinyl- alcohol, polyethylene oxide, or calcium phosphate may be used. Known conditions can be applied to the conditions such as the amounts of the initiator and the protective colloidal agent used, the pressure, the deoxidization, and the stirring.

In the polyorganosiloxane-containing graft copolymer (the total amount of siloxane and monomer units that constitute the copolymer is defined as 100 % by weight) of the present invention, in order not to impair flame retardancy of the resulting resin composition, the content of the polymer (E) derived from the ethylenically unsaturated monomer (D) is preferably at least 0.5 % by weight, more preferably at least 3 % by weight, and further preferably at least 5 % by weight, but preferably not more than 34.9 % by weight, more preferably not more than 24.5 % by weight, and further preferably not more than 15 % by weight.

Thus, when the polyorganosiloxane-containing graft copolymer of the present invention is prepared by emulsion polymerization, a divalent or higher-valent metal salt such as calcium chloride, magnesium chloride, magnesium sulfate, or aluminum chloride is added to a latex so as to perform coagulation. Subsequently, heat treatment, dehydration, washing, and drying are performed, thereby separating the graft copolymer from an aqueous medium (coagulation process). As the divalent or higher-valent metal salt, calcium chloride or magnesium chloride is preferred from the

viewpoint that it is economically available at low cost and it can be easily handled.

When it is desired that even a trace of halogen be not contained from the environmental concern, magnesium sulfate is preferably used. In a step following the salt coagulation, the slurry is diluted prior to dehydration preferably 20 times or more, more preferably 30 times or more, and further preferably 50 times or more based on the solid content of the graft copolymer. Alternatively, in a step after dehydration, the slurry is washed by spraying a solvent, preferably water in view of environmental loading, in an amount of preferably 3 times or more, more preferably 5 times or more, and further preferably 10 times or more based on the solid content of the graft copolymer. Thereby, a problem of tanning or decomposition of the matrix resin during molding can be suppressed and flame retardancy and mechanical properties can be balanced more satisfactorily.

Alternatively, a water-soluble organic solvent such as an alcohol such as methanol, ethanol, or propanol, or acetone is added to a latex to precipitate the copolymer. The copolymer is recovered from the solvent by centrifuge or filtration, and is then dried. Thus, the copolymer can be isolated. An example of another method is a method in which an organic solvent having some water solubility, such as methyl ethyl ketone, is added to a latex containing the graft copolymer of the present invention so that the copolymer in the latex is extracted in the organic solvent layer, the organic solvent layer is separated and is then mixed with water to precipitate the copolymer component.

Alternatively a latex may be directly formed into a powder by spray drying. In this case, by washing the resulting powder with a solvent as in the coagulation process described above, the same effect can be obtained. Alternatively, by adding calcium chloride, magnesium chloride, magnesium sulfate or aluminum chloride, preferably in the form of solution such as an aqueous solution to the resulting powder, the same effect can be obtained. When the graft copolymer of the present invention is obtained by suspension seed polymerization, the graft copolymer can be separated from an aqueous medium by dehydrating, washing, and drying. In this case, by diluting or washing with a solvent as in the coagulation process, the same effect can be obtained.

When a powdery matrix resin is used for preparing a resin composition by blending, the graft copolymer of the present invention is preferably recovered as a powder having a volume-average particle size of preferably at least 1 $\mu$m, more preferably at least 10 $\mu$m, and further preferably at least 50 $\mu$m, but preferably not more than 1 mm, more preferably not more than 500 $\mu$m, and further preferably not more than 200 $\mu$m. In particular, preferably, the volume-average particle size of the graft copolymer is close to or the same as that of the matrix resin powder because the resultant powder is not easily classified. The powder is preferably in a state in which the copolymer of the present invention is moderately coagulated from the viewpoint that primary particles of the graft copolymer are easily dispersed in the matrix resin.

In order not to impair flame retardancy of the resulting resin composition, a graft ratio of the graft copolymer of the present invention prepared as described above is preferably at least 1.001, more preferably at least 1.01, further preferably at least 1.04, and particularly preferably at least 1.08, but preferably not more than 2, more preferably not more than 1.4, further preferably not more than 1.28, and particularly preferably not more than 1.15. The graft ratio in the present invention is calculated as follows: About 2 g of the graft copolymer of the present invention is precisely weighed and is then immersed in about 100 g of 2-butanone serving as an extracting solvent for 12 hours. A gel portion is precipitated by ultracentrifuge to separate the gel portion from a supernatant. The addition of 2-butanone to the recovered gel portion and the ultracentrifugation operation are further repeated twice. The recovered gel portion is dried and is then precisely weighed. A content of gel portion is determined in accordance with the following (equation 1).

$$\text{Content of gel portion (\%)} = \text{weight of residual gel portion/weight of graft copolymer} \cdots \text{(equation 1)}$$

Subsequently, all the supernatants of a component soluble in 2-butanone are combined. The resulting solution is then concentrated until the solution has a weight of about 20 g. The concentrated solution is added dropwise in 300 mL of methanol to reprecipitate a component insoluble in methanol (hereinafter, the component is referred to as "free polymer"). The free polymer is recovered, dried, and then precisely weighed. The content of free polymer is determined in accordance with the following (equation 2).

$$\text{Content of free polymer (\%)} = \text{weight of free polymer/weight of graft copolymer} \cdots \text{(equation 2)}$$

Charged rate of siloxane in the graft copolymer is determined by the following (equation 3).

Charged rate of siloxane (%) = weight of raw materials concerning only polyorganosiloxane component/total weight of raw materials of graft copolymer ··· (equation 3)

The graft ratio is determined by the following (equation 4) using the content of gel portion, the content of free polymer, and the charged rate of siloxane.

Graft ratio (%) = content of gel portion/((content of gel portion + content of free polymer) × charged rate of siloxane) ··· (equation 4)

The reduced viscosity of the solution, in which 0.2 g of a component soluble in 2-butanone and insoluble in methanol, that is contained in the graft copolymer of the present invention, is dissolved in 100 $cm^3$ of acetone, measured at 30°C (described as a condition of an acetone solution of 0.2 g/100 $cm^3$ at 30°C) is preferably at least 0.01 dl/g, more preferably at least 0.02 dl/g, and further preferably at least 0.035 dl/g, but preferably not more than 0.8 dl/g, more preferably not more than 0.4 dl/g, further preferably not more than 0.2 dl/g, and particularly preferably not more than 0.12 dl/g in order not to impair flame retardancy of the resulting resin composition. A method for separating the above component is the same as the method for obtaining the free polymer component described in the calculation of the graft ratio.

The weight-average molecular weight based on a polystyrene equivalent by GPC of the component soluble in 2-butanone and insoluble in methanol, which is contained in the graft copolymer of the present invention and obtained as described above, is at least 50,000, and particular preferably at least 80,000, but preferably not more than 1,000,000, more preferably not more than 450,000, further preferably not more than 200,000, and particularly preferably not more than 150,000 in order not to impair flame retardancy of the resulting resin composition. A method for separating the above component is the same as the method for obtaining the free polymer component described in the calculation of the graft ratio.

In the present invention, a resin composition obtained by blending the graft copolymer of the present invention with a matrix resin such as a thermoplastic resin, a thermosetting resin, or an elastomer can be used. The graft copolymer of the present invention is characterized in that the degradation of flame retardancy is suppressed while mechanical properties such as impact strength are improved. The flame retardancy can be maintained or further improved by preferably adjusting the target resin and additives. Thus, the graft copolymer of the present invention can also be used as a flame retardant for the matrix resin. The resin composition can be used as a flame retardant resin composition capable of imparting high flame retardancy and impact strength to final moldings.

From the viewpoint that flame retardancy and mechanical properties represented by impact strength are balanced, the amount of graft copolymer of the present invention based on the matrix resin is preferably at least 0.1 part by weight, further preferably at least 0.5 part by weight, and particularly preferably at least 1 part by weight, but preferably not more than 20 parts by weight, further preferably not more than 10 parts by weight, particularly preferably not more than 6 parts by weight, and most preferably not more than 4 parts by weight based on 100 parts by weight of the matrix resin. In an amount exceeding the above range, molding may be difficult to perform or flame retardancy may be decreased. In an amount below the above range, both flame retardancy and impact strength tend to be difficult to exhibit.

Examples of preferred thermoplastic resins that can be used as the matrix resin are polycarbonate resins such as aromatic polycarbonates and aliphatic polycarbonates; polyester resins; polyestercarbonate resins; polyphenylene ether resins; polyphenylene sulfide resins; polysulfone resins; polyethersulfone resins; polyarylene resins; polyamide resins such as nylons; polyetherimide resins; polyacetal resins such as polyoxymethylene; polyvinyl acetal resins; polyketone resins; polyetherketone resins; polyetheretherketone resins; polyarylketone resins; polyethernitrile resins; liquid crystal resins; polybenzimidazole resins; polyparabanic acid resins; vinyl polymer or copolymer resins each prepared by polymerizing or copolymerizing at least one vinyl monomer selected from the group consisting of aromatic alkenyl

compounds, methacrylic esters, acrylic esters, and vinyl cyanide compounds; vinyl cyanide-(ethylene-diene-propylene (EPDM))-aromatic alkenyl compound copolymer resins; polyolefins; and vinyl chloride resins. These may be used alone or in blending of two or more resins.

Polyphenylene ether resins usable in the present invention are homopolymers or copolymers represented by the following chemical formula (Ch. 1):

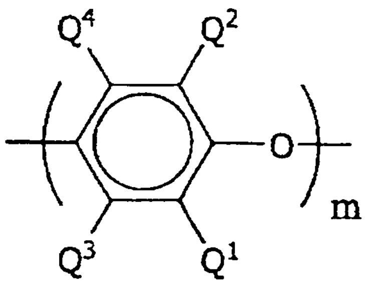

(wherein each of $Q^1$ to $Q^4$ represents a group independently selected from the group consisting of hydrogen and hydrocarbon groups and m represents an integer of 30 or more.)

Specific examples of the polyphenylene ether resins are poly(2,6-dimethyl-1,4-phenylene)ether, poly(2-methyl-6-propyl-1,4-phenylene)ether, poly(2,6-diethyl-1,4-phenylene)ether, poly(2-ethyl-6-propyl-1,4-phenylene)ether, poly (2,6-dipropyl-1,4-phenylene)ether, a copolymer of (2,6-dimethyl-1,4-phenylene)ether and (2,3,6-trimethyl-1,4-phenylene)ether, a copolymer of (2,6-diethyl-1,4-phenylene)ether and (2,3,6-trimethyl-1,4-phenylene)ether, and a copolymer of (2,6-dimethyl-1,4-phenylene)ether and (2,3,6-triethyl-1,4-phenylene)ether.

In particular, poly(2,6-dimethyl-1,4-phenylene)ether and a copolymer of (2,6-dimethyl-1,4-phenylene)ether and (2,3,6-trimethyl-1,4-phenylene)ether are preferred. Poly(2,6-dimethyl-1,4-phenylene)ether is most preferred.

These polyphenylene ether resins have compatibility with polystyrene resin in any mixing ratio. The degree of polymerization of polyphenylene ether resin used in the present invention is not particularly limited. A resin having a reduced viscosity of a solution prepared by dissolving 0.2 g of the resin in 100 $cm^3$ of chloroform, measured at 25°C, of 0.3 to 0.7 dl/g is preferably used. Use of a resin having a reduced viscosity below 0.3 dl/g tends to decrease thermal stability. Use of a resin having a reduced viscosity exceeding 0.7 dl/g tends to impair moldability. These polyphenylene ether resins are used alone or as a mixture of two or more resins.

The polyphenylene ether resin may be mixed with another resin, preferably a polystyrene resin described below, for use. When the polyphenylene ether resin is mixed with another resin for use, the preferred mixing ratio of the polyphenylene ether resin to the other resin may be determined in a known range.

Vinyl chloride resins usable in the present invention are vinyl chloride homopolymers, copolymers of vinyl chloride and another vinyl monomer having at least one double bond copolymerizable with the vinyl chloride, chlorinated vinyl chloride resins, and chlorinated polyethylene resins. The content of the other vinyl monomer in a copolymer is preferably up to 50 % by weight and more preferably up to 45 % by weight.

Examples of the other vinyl monomer having at least one double bond are ethylene, propylene, vinyl acetate, (meth)acrylic acid and esters thereof, maleic acid and esters thereof, vinylidene chloride, vinyl bromide, and acrylonitrile. These vinyl chloride resins are prepared by homopolymerizing only vinyl chloride or copolymerizing vinyl chloride and the other vinyl monomer in the presence of a radical polymerization initiator. The polymerization degree of the vinyl chloride resin is generally 400 to 4,500 and particularly preferably 400 to 1,500.

In the vinyl polymer or copolymer resins prepared by polymerizing or copolymerizing at least one vinyl monomer selected from the group consisting of aromatic alkenyl compounds, methacrylic esters, acrylic esters, and vinyl cyanide compounds, which can be used in the present invention, a diene monomer, an olefin monomer or a maleimide monomer, may be copolymerized, furthermore, these may be hydrogenated. Examples of the vinyl polymer or copolymer resin are polystyrene resin, s-polystyrene resins, poly(methyl methacrylate) resin, polychlorostyrene resin, polybromostyrene resin, poly(a-methylstyrene) resin, styrene-acrylonitrile copolymer resin, styrene-methyl methacrylate copolymer resin, styrene-maleic anhydride copolymer resin, styrene-maleimide copolymer resin, styrene-N-phenylmaleimide copolymer resin, styrene-N-phenylmaleimide-acrylonitrile copolymer resin, methyl methacrylate-butyl acrylate copolymer resin, methyl methacrylate-ethyl acrylate copolymer resin, styrene-acrylonitrile-$\alpha$-methylstyrene ternary copolymer resin, butadiene-styrene copolymer (HIPS) resin containing a diene component or phenylmaleimide component, acrylonitrile-butadiene rubber-styrene copolymer (ABS) resin, acrylonitrile-butadiene rubber-$\alpha$-methylstyrene copolymer resin, and aromatic alkenyl compound-diene-vinyl cyanide-N-phenylmaleimide copolymer resin.

Examples of polyamide resins usable in the present invention are polyamides each derived from an aliphatic, alicyclic, or aromatic diamine such as ethylenediamine, tetramethylenediamine, hexamethylenediamine, decamethylenediamine, dodecamethylenediamine, 2,2,4- or 2,4,4-trimethylhexamethylenediamine, 1,3-bis(aminomethyl)cyclohexane, 1,4-bis(aminomethyl)cyclohexane, bis(p-aminocyclohexyl)methane, m-xylylenediamine, or p-xylylenediamine and an aliphatic, alicyclic, or aromatic dicarboxylic acid such as adipic acid, suberic acid, sebacic acid, cyclohexanedicarboxylic acid, terephthalic acid, or isophthalic acid; polyamides each prepared by ring-opening polymerization of a lactam such as ε-caprolactam or ω-dodecalactam; polyamides each prepared from 6-aminocaproic acid, 1,1-aminoundecanoic acid, or 1,2-aminododecanoic acid; copolymers of these; and blends of these. Nylon 6, nylon 6,6, nylon 11, nylon 12, nylon 6,10, nylon 4,6, copolymers of these, and blends of these, which are industrially produced at low cost and in large quantities, are suitable.

Examples of polyester resins usable in the present invention are resin each derived from a polycondensate of a dicarboxylic acid or a derivative such as an alkyl ester of a dicarboxylic acid and a diol, resins each prepared by polycondensation of a monomer having a carboxylic acid or a derivative such as an alkyl ester of a carboxylic acid and a hydroxyl group per molecule, and resins each prepared by ring-opening polymerization of a monomer having a cyclic ester structure per molecule.

Examples of the dicarboxylic acid are terephthalic acid, isophthalic acid, succinic acid, adipic acid, and sebacic acid. Examples of the diol are ethanediol, propanediol, butanediol, pentanediol, and hexanediol. Examples of the monomer having a carboxylic acid or a derivative such as an alkyl ester of a carboxylic acid and a hydroxyl group per molecule are hydroxyalkanoic acids such as lactic acid, hydroxypropionic acid, hydroxybutyric acid and hydroxyhexanoic acid. Examples of the monomer having a cyclic ester structure per molecule are caprolactones.

Examples of the polyester resin are polymethylene terephthalate, polyethylene terephthalate, polypropylene terephthalate, polytetramethylene terephthalate, polybutylene terephthalate, polyhexamethylene terephthalate, polyethylene naphthalate, poly(lactic acid), polyhydroxybutyrate, poly(hydroxybutyrate-hydroxyhexanoate), polyethylene succinate, polybutylene succinate, polybutylene adipate, poly-ε-caprolactone, poly(α-oxyacid), copolymers of these, and blends of these. In the present invention, polybutylene terephthalate, polyethylene terephthalate, and polylactic acid are particularly preferred.

Polyphenylene sulfide resins usable in the present invention are polymers having a polymerization degree of 80 to 300 and containing at least 50 % by mol and preferably at least 70 % by mol of the following repeating unit:

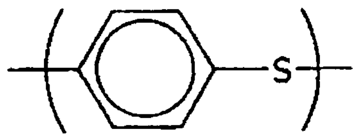

Examples of a unit of a comonomer are

Meta bond

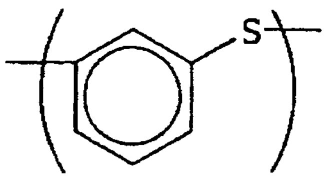

Ortho bond

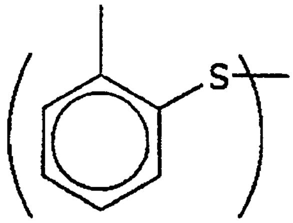

Ether bond

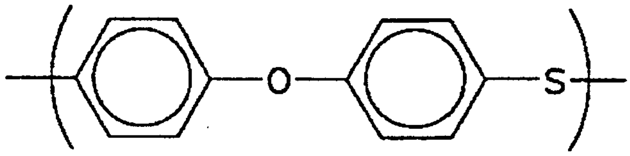

Sulfone bond

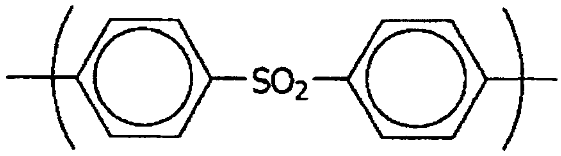

Biphenyl bond

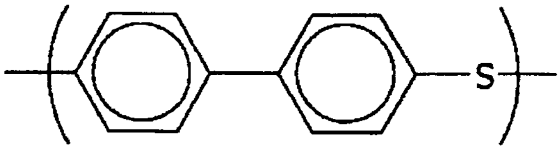

Substituted phenylsulfide bond

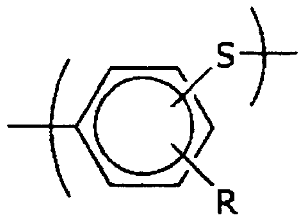

(wherein R represents an alkyl group, a nitro group, a phenyl group, an alkoxy group, a carboxylic acid group or its metal salt.) The content of the comonomer is preferably 10 % by mol or less.

Polysulfone resins are polymers containing an -$SO_2$ group and are broadly classified into aromatic polymers and olefinic polymers. In the present invention, the polysulfone resins mean preferably the aromatic polymers. Examples thereof are polymers obtained by condensation polymerization of dichlorodiphenyl sulfone, the polymers each having the following repeating unit:

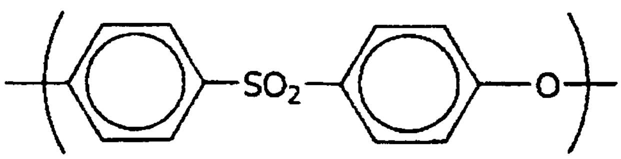

and polymers obtained from dichlorodiphenyl sulfone and bisphenol A, the polymers each having the following repeating unit:

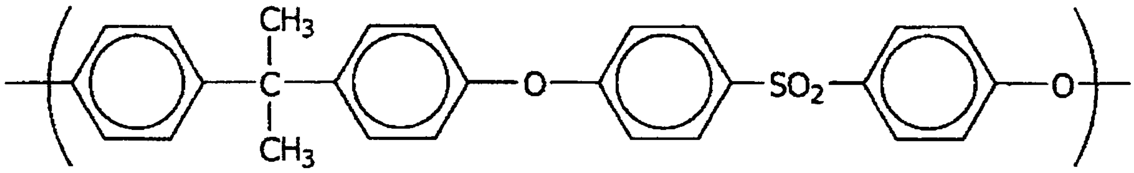

In general, the former is referred to as polyethersulfone resins and the latter is referred to as polysulfone resins. These resins are useful for the present invention.

Polyetherimide resins usable in the present invention are polymers each having the following repeating unit having an ether bond and an imide bond:

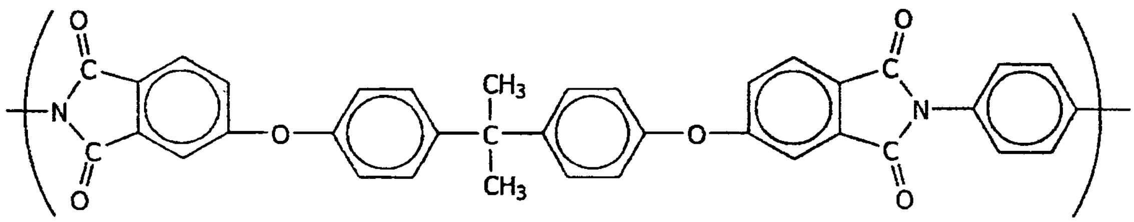

Polyvinyl acetal resins usable in the present invention are resins each prepared by modifying polyvinyl alcohol with an aldehyde. Examples thereof are polyvinyl formal and polyvinyl butyral.

Polyolefin resins usable in the present invention may be not only polymers represented by polyethylene, polypropylene, polymethylpentene, polybutene, cycloolefin polymers, or copolymers which are obtained from only olefins but also copolymers of olefins and compounds having at least one copolymerizable double bond. Examples of the copolymerizable compounds are (meth)acrylic acid and esters thereof, maleic acid and esters thereof, maleic anhydride, and vinyl acetate. These copolymerizable compounds are preferably used in an amount of 10 % by weight or less. The concept of polyolefin resins usable in the present invention includes copolymers prepared by hydrogenating a copolymer of a diene component and another vinyl monomer, for example, acrylonitrile-EPDM-styrene copolymer (AES) resins. The polymerization degree of the polyolefin resins is preferably 300 to 6,000.

Examples of polyarylene resins used in the present invention are poly(p-phenylene), poly(2,5-thienylene), and poly(1,4-naphthalenediyl).

Polycarbonate resins used in the present invention are resins each prepared by reacting a divalent phenol with phosgene or a precursor of carbonate. The divalent phenol is preferably a bis(hydroxyaryl)alkane. Examples thereof are bis(hydroxyphenyl)methane, 1,1-bis(4-hydroxyphenyl)ethane, 1,2-bis(4-hydroxyphenyl)ethane, 2,2-bis(hydroxyphenyl)propane, 2,2-bis(4-hydroxyphenyl-3-methylphenyl)propane, 2,2-bis(4-hydroxy-3,5-dibromophenyl)propane, 2,2-bis(4-hydroxy-3,5-dichlorophenyl)propane, and 2,2-bis(hydroxyphenyl)hexafluoropropane. Other examples of the divalent phenol are bis(4-hydroxyphenyl)cycloalkanes such as 1,1-bis(4-hydroxyphenyl)cyclohexane, 1,1-bis(4-hydroxyphenyl)-3,3,5-trimethylcyclohexane, and 1,1-bis(4-hydroxyphenyl)cyclodecane; fluorene derivatives such as 1,1-bis(4-hydroxyphenyl)fluorene, 1,1-biscresolfluorene, and 1,1-bisphenoxyethanolfluorene; phenyl-group-containing bis(hydroxyphenyl)alkanes such as phenylbis(hydroxyphenyl)methane, diphenylbis(hydroxyphenyl)methane, and 1-phenyl-1,1-bis(4-hydroxyphenyl)ethane; 4,4'-dihydroxydiphenyl; bis(4-hydroxyphenyl) oxide; bis(4-hydroxyphenyl) sulfide; bis (4-hydroxyphenyl) sulfone; bis(4-hydroxyphenyl) sulfoxide, bis(4-hydroxyphenyl) ketone; hydroquinone; piperazine; dipiperidyl hydroquinone; and resorcin. These divalent phenols are used alone or as a mixture. Among these, divalent phenols that do not contain halogens are preferably used. Divalent phenols that are particularly preferably used are bis (hydroxyphenyl)methane, 2,2'-bis(hydroxyphenyl)propane, 4,4'-dihydroxydiphenyl, and 1,1-bis(4-hydroxyphenyl)fluorene. Examples of the precursor of carbonate are diaryl carbonates such as diphenyl carbonate; and dialkyl carbonates such as dimethyl carbonate and diethyl carbonate. In addition to these aromatic polycarbonate resins, aliphatic polycarbonate resins such as polyethylene carbonate can also be used. These polycarbonate resins may be resins each prepared by copolymerizing dimethylsiloxane in the main chain.

Examples of polyketones usable in the present invention are an alternating copolymer of ethylene and carbon monoxide and an alternating copolymer of an α-olefin and carbon monoxide.

Among these thermoplastic resins, aromatic polycarbonate resins are particularly preferred because use of these resins can exhibit a flameproofing effect. The concept of the aromatic polycarbonate resins includes resins containing at least 50 % by weight of an aromatic polycarbonate resin based on the total amount of the aromatic polycarbonate resin and other resins. The content of the aromatic polycarbonate resin is preferably at least 70 % by weight. A case in which the aromatic polycarbonate resin is substantially used alone is most preferred. The phrase "the aromatic polycarbonate resin is substantially used alone" means that the content of the aromatic polycarbonate resin is at least 95 % by weight.

When the content of the aromatic polycarbonate resin is within the above range, satisfactory flame retardancy and impact strength can be achieved in good balance. The effect tends to be improved as the content of the aromatic polycarbonate resin increases. As the aromatic polycarbonate resin, copolymers such as polyamide-polycarbonate resins and polyester-polycarbonate resins may also be used. In such a case, preferably, the content of the polycarbonate unit in the total resin is controlled to the same as the above. The resins other than the aromatic polycarbonate resins cited in the above-described thermoplastic resins can be used as the other resins contained in the aromatic polycarbonate resins.

In use of the aromatic polycarbonate resins, a sulfur-containing organometallic salt may be contained in order to synergetically improve flame retardancy. The sulfur-containing organometallic salt may be used alone or in combinations of two or more salts. Preferred examples of the sulfur-containing organometallic salt are metal salts of sulfonic acid, metal salts of sulfate monoester, and metal salts of sulfonamide. Among these, in view of flame retardancy, metal salts of sulfonic acid are preferably used, and metal salts of (alkyl)aromatic sulfonic acid, metal salts of perfluoroalkane sulfonic acid, metal salts of aliphatic sulfonic acid, metal salts of diaryl sulfone sulfonic acid, and metal salts of alkyl sulfuric acid are particularly preferably used.

Preferred examples of metals of the metal salts are sodium, potassium, lithium, rubidium, cesium, beryllium, magnesium, calcium, strontium, barium, and aluminum. More preferably, alkali metals such as sodium, potassium, lithium, rubidium, and cesium are used. Further preferably, sodium or potassium is used.

Specific examples of the metal salts of sulfonamide are sodium salt of saccharin, sodium salt of N-(p-tolylsulfonyl)-p-toluenesulfoimide, sodium salt of N-(N'-benzylaminocarbonyl) sulfanilimide, and sodium salt of N-(phenylcarboxyl) sulfanilimide. Specific examples of the metal salts of (alkyl)aromatic sulfonic acid are sodium dodecylbenzenesulfonate, sodium p-toluenesulfonate, sodium dichlorobenzenesulfonate, sodium benzenesulfonate, sodium xylenesulfonate, and sodium cumenesulfonate. Specific examples of the metal salts of perfluoroalkane sulfonic acid are potassium perfluorobutane sulfonate and potassium perfluoromethylbutane sulfonate. Specific examples of the metal salts of aliphatic sulfonic acid are sodium dodecyl sulfonate and sodium dioctyl sulfosuccinate. Specific examples of the metal salts of diaryl sulfone sulfonic acid are potassium diphenylsulfone-3-sulfonate, potassium 4,4'-dibromodiphenyl-sulfone-3-sulfonate, potassium 4-chloro-4'-nitrodiphenylsulfone-3-sulfonate, and potassium diphenylsulfone-3,3'-disulfonate. A specific example of the metal salts of alkyl sulfuric acid is sodium dodecyl sulfate.

Among these, from the viewpoint that even a small amount of addition can improve flame retardancy, potassium perfluorobutane sulfonate is particularly preferably used. From the viewpoint that the metal salt does not include a halogen and even a small amount of addition can improve flame retardancy, potassium diphenylsulfone-3-sulfonate, sodium dodecylbenzenesulfonate, sodium xylenesulfonate, and sodium cumenesulfonate are particularly preferably used. Sodium salts of (alkyl)aromatic sulfonic acid represented by dodecylbenzenesulfonic acid are most preferred because these salts can be industrially available at low cost for use.

In use of the sulfur-containing organometallic salt, the content of the organometallic salt is preferably at least 0.001 part by weight (more preferably at least 0.005 part by weight, and further preferably at least 0.01 part by weight) based on 100 parts by weight of the aromatic polycarbonate resin. In addition, the content of the organometallic salt is preferably up to 0.5 part by weight (more preferably up to 0.3 part by weight, further preferably up to 0.019 part by weight, and most preferably up to 0.015 part by weight). The presence of the sulfur-containing organometallic salt may decrease the strength of the resin composition in some cases. However, the above range is preferred from the viewpoint that the effect of improving flame retardancy is excellent, and the strength and the flame retardancy are balanced. At a content below the above range, the flameproofing effect is small or the effect is barely achieved. On the other hand, at a content exceeding the above range, the flame retardancy may be degraded.

Examples of preferred thermosetting resins that can be used as the matrix resin are epoxy resins, phenolic resins, urea resins, melamine resins, polyimide resins, polyamide-imide resins, thermosetting polyester resins (unsaturated polyester resins), alkyd resins, silicone resins, urethane resins, polyvinylester resins, poly(diallyl phthalate) resins, bismaleimide-triazine resins, furan resins, xylene resins, guanamine resins, maleic resins, and dicyclopentadiene resins.

Epoxy resins generally used for epoxy resin molding materials for sealing semiconductors can be widely used in the present invention. Examples thereof are novolak-type epoxy resins, such as phenol novolak-type epoxy resins and cresol novolak-type epoxy resins, which are prepared by glycidyl etherification of novolak resins prepared by condensation of phenols, biphenols, or naphthols with aldehydes; biphenyl-type epoxy resins such as 2,2',6,6'-tetramethylbiphenoldiglycidyl ether; polyglycidyl ethers of polyhydric phenols or polyhydric alcohols, such as biphenols, aromatic nucleus-substituted biphenols, bisphenol-A, F, S, or trimethylolpropane and condensates of these; and alicyclic epoxy resins each containing a cycloolefin oxide structure per molecule.

Among these, at least one epoxy resin selected from diglycidyl ethers of biphenols or aromatic nucleus-substituted biphenols and condensates of these, novolak-type epoxy resins, dicyclopentadienyl-type epoxy resins, and alicyclic epoxy resins each containing a cycloolefin oxide structure per molecule is preferably contained at least 50 % by weight based on the total amount of the thermosetting resin. These can be cured with phenolic resins such as phenol novolak, aliphatic amines, aromatic amines, carboxylic acid derivatives such as acid anhydrides and blocked carboxylic acids, or the like. In particular, among these, from the viewpoint that heat resistance of the resulting cured product is improved, phenolic resins are more preferably used.

Examples of preferred elastomers that can be used as the matrix resin are natural rubbers and synthetic rubbers such as acrylic rubbers such as butyl acrylate rubber, ethyl acrylate rubber, and octyl acrylate rubber; nitrile rubbers such as butadiene-acrylonitrile copolymers; chloroprene rubber; butadiene rubber; isoprene rubber; isobutylene rubber; styrene-butadiene rubber; methyl methacrylate-butyl acrylate block copolymers; styrene- isobutylene block copolymers; styrene-butadiene block copolymers; hydrogenated styrene-butadiene block copolymers; ethylene-propylene copolymers (EPR); hydrogenated ethylene-butadiene copolymers (EPDM); polyurethanes; chlorosulfonated polyethylene; silicone rubbers (millable type, room-temperature vulcanization type); butyl rubber; fluorine rubber; olefin thermoplastic elastomers; styrene thermoplastic elastomers; vinyl chloride thermoplastic elastomers; urethane thermoplastic elastomers; polyamide thermoplastic elastomers; polyester thermoplastic elastomers; and fluorinated thermoplastic elastomers. Thus, various elastomers can be used.

The polyorganosiloxane copolymer of the present invention and the matrix resin are mixed with a generally known kneading machine. Examples of the machine are a mixing roll, a calender roll, a Banbury mixer, a Henschel mixer, a ribbon blender, a kneader, an extruder, a blow molding machine, and an inflation molding machine.

In the present invention, an antioxidant may be further mixed in the resin composition containing the graft copolymer. The usable antioxidant is not limited and phenolic antioxidants, phosphorus antioxidants and sulfur-containing antioxidants can be used. These may be used alone or in combination.

Specific examples of the phenolic antioxidants are 2,4-dimethyl-6-(1-methylpentadecyl)phenol, 2,6-di-tert-butyl-p-cresol, 4,4'-butylidenebis-(6-tert-butyl-3-methylphenol), 2,2'-methylenebis-(4-methyl-6-tert-butylphenol), 2,2'-methylenebis-(4-ethyl-6-tert-butylphenol), 2,6-di-tert-butyl-4-ethylphenol, 1,1,3-tris(2-methyl-4-hydroxy-5-tert-butylphenyl)butane, octadecyl-3-(3,5-di-tert-butyl-4-hydroxyphenyl)propionate, tetrakis[methylene-3-(3,5-di-tert-butyl-4-hydroxyphenyl)propionate]methane, triethyleneglycolbis[3-(3-tert-butyl-4-hydroxy-5-methylphenyl)propionate], tris(3,5-di-tert-butyl-4-hydroxybenzyl)isocyanurate, and butylidene-1,1-bis-(2-methyl-4-hydroxy-5-tert-butyl-phenyl).

These may be used alone or in combination. In order to impart satisfactory flame retardancy, two or more of the phenolic antioxidants may be preferably used in combination. Examples of particularly preferable combination are a combination of 2,4-dimethyl-6-(1-methylpentadecyl)phenol and octadecyl-3-(3,5-di-tert-butyl-4-hydroxyphenyl)propionate and combinations of tris(3,5-di-tert-butyl-4-hydroxybenzyl)isocyanurate with any one of the other phenolic antioxidants, in particular, a combination with 1,1,3-tris(2-methyl-4-hydroxy-5-tert-butylphenyl)butane.

Specific examples of the phosphorus antioxidants are cyclic neopentanetetraylbis(2,6-di-tert-butyl-4-methylphenyl)phosphite, tris(2,4-di-tert-butylphenyl)phosphite, bis(2,6-di-tert-butyl-4-methylphenyl)pentaerythritol phosphite, and 2,2-methylenebis(4,6-di-tert-butylphenyl)octyl phosphite.

Specific examples of the sulfur antioxidants are dilauryl thiodipropionate, distearyl thiodipropionate, dimyristyl thiodipropionate, and ditridecyl thiodipropionate. Preferably, these sulfur antioxidants are used in combination with tris (3,5-di-tert-butyl-4-hydroxybenzyl)isocyanurate, which is one of the above phenolic antioxidants, to impart satisfactory flame retardancy.

As an antioxidant having both properties of the phenolic antioxidant and the sulfur antioxidant, for example, 4,4'-thiobis-(6-tert-butyl-3-methylphenol) may also be used.

In view of the balance between the effect and the cost, the amount of the antioxidant used is preferably at least 0.001 part by weight, further preferably at least 0.01 part by weight, and particularly preferably at least 0.015 part by weight, but preferably not more than 1 part by weight, more preferably not more than 0.4 part by weight, further preferably not more than 0.1 part by weight, and particularly preferably not more than 0.075 part by weight based on 100 parts by weight of a resin composition containing the graft copolymer of the present invention.

A method for mixing the antioxidant and the resin composition containing the graft copolymer is not limited. Examples of the method are a method of simultaneously mixing the antioxidant in mixing the graft copolymer of the present invention with at least one resin selected from thermoplastic resins, thermosetting resins, and elastomers, a method of mixing the graft copolymer with a premix of the resin and the antioxidant, a method of mixing the resin with a premix of the antioxidant and the graft copolymer, and a method of mixing the antioxidant with a premix of the graft copolymer and the resin.

In this process, additives in general use may be appropriately incorporated according to need. Examples thereof are anti-dripping agents; flame retardants such as red phosphorus, phosphoric esters represented by bisphenol-bis (diphenylphosphate) or triphenylphosphate, condensed phosphoric esters, tetrabromobisphenol-A, tris(2,3-dibromopropyl)isocyanurate, and hexabromocyclodecane; butadiene-methyl methacrylate-styrene copolymer (MBS), impact modifier prepared by graft-copolymerizing methyl methacrylate, styrene or acrylonitrile with alkyl (meth)acrylate rubber, or a composite rubber comprising polyorganosiloxane and alkyl (meth)acrylate rubber; plasticizers; lubricants; melt viscosity (elasticity) adjusters such as a high-molecular-weight poly(methyl methacrylate) resin; ultraviolet absorbers; pigments; fiber reinforcing agents such as glass fibers; fillers such as talc, mica, calcium carbonate, titanium oxide, zinc oxide nanoparticles, layer silicate, metal fine particles, and carbon nanotubes; antistatic agents such as polyamide-polyether blocks, alkylene glycols, glycerin, and fatty acid esters; flowability improvers such as terpene resins and acrylonitrile-styrene copolymer; mold-releasing agents such as monoglyceride, a silicone oil, and polyglycerin; compatibilizers such as functional-group-containing polyorganosiloxanes such as epoxy-group-containing polyorganosiloxanes and (epoxy-modified) styrene-butadiene-styrene block copolymers; and coupling agents for the fillers and matrix resins, such as polyols, silane coupling agents, and titanium coupling agents.

In particular, as an anti-dripping agent in a combustion test such as a UL-94 test, a fluorocarbon resin such as polytetrafluoroethylene or polyvinylidene fluoride; a powder complex of polytetrafluoroethylene with another polymer such as a polymer prepared by polymerizing a (meth)acrylic ester, an aromatic alkenyl compound, or vinyl cyanide; or a polyorganosiloxane may be used. The content thereof is preferably not more than 2 parts by weight, more preferably not more than 1 part by weight, and further preferably not more than 0.6 part by weight, but preferably at least 0.1 part by weight based on 100 parts by weight of the matrix resin. Use in the above range is preferable because the effect of preventing dripping can be obtained when a problem of dripping occurs.

With respect to a method for molding a resin composition of the present invention, when the resin composition of the present invention is prepared from the polyorganosiloxane copolymer of the present invention and a thermoplastic resin, a molding method used for molding conventional thermoplastic resin compositions, such as injection molding, extrusion molding, blow molding, calender molding, inflation molding, or rotational molding can be used. When the resin composition of the present invention is prepared from the polyorganosiloxane copolymer of the present invention and a thermosetting resin, for example, a method of charging the flame retardant resin composition of the present invention in a mold, and then curing by heating can be used. When the resin composition of the present invention is prepared from the polyorganosiloxane copolymer of the present invention and an elastomer, the resin composition is formed into a desired shape by a molding method such as slush molding, injection molding, or hot press molding, and is then vulcanized if necessary to form a molded article.

Applications of molded articles obtained from the resin composition of the present invention are not particularly limited but include applications wherein impact strength, flame retardancy and, cold resistance are required. Examples are office products and household electric appliances such as desktop computers, notebook computers, liquid crystal displays, plasma displays, projectors, projection televisions, PDAs, printers, copy machines, fax machines, (portable) audio equipment, (portable) video equipment, (portable) telephones, lighting equipment, game machines, digital video cameras, digital cameras, video recorders, hard disk video recorders, DVD recorders, and clocks; parts for batteries or capacitors for automobiles or the like; electronic/electrical components such as LED display device, display materials in a power supply box, telephone jacks, terminal block covers, and coil bobbins; electric/ electronic materials such as a sealing agent; sealing materials; vibration-preventing materials for glass, and automotive parts such as a heater fan, a steering wheel, and a vibration-proof material.

The resulting molded articles are excellent in impact strength particularly at low temperatures and flame retardancy.

EXAMPLES

Examples that represent the present invention more specifically are described but the present invention is not limited thereto. Measurements and tests described below were performed as follows.

[Polymerization conversion]

A part of a resulting latex was sampled and precisely weighed. After the latex was dried in a hot air dryer at 130°C for 1 hour, the solid content was precisely weighed to determine the ratio of solid component in the latex. The polymerization conversion was calculated by (total weight of charged raw materials x ratio of solid component - total weight of raw materials other than monomers)/weight of charged monomers x 100 (%). A chain transfer agent was treated as a charged monomer.

[Volume-average particle size]

Volume-average particle sizes of seed polymers, polyorganosiloxane particles, and graft copolymers were measured in a latex form. The volume-average particle size (μm) was measured with a measuring apparatus of MICROTRAC UPA150 manufactured by NIKKISO Co., Ltd.

[Graft ratio]

About 2 g of a graft copolymer of the present invention was precisely weighed and was then immersed in about 100 g of 2-butanone serving as an extracting solvent for 12 hours. A gel portion was precipitated by ultracentrifuge to separate the gel portion from a supernatant. The addition of 2-butanone to the recovered gel portion and the ultracentrifugation operation were further repeated twice. The ultracentrifugation was performed under the condition of 30,000 rpm for 1 hour per one operation. The recovered gel portion was dried and was then precisely weighed. A content of gel portion was determined in accordance with the following (equation 1).

Content of gel portion (%) = weight of residual gel portion/weight of graft copolymer ··· (equation 1)

Subsequently, all the supernatants containing a component soluble in 2-butanone were combined. The resulting solution was then concentrated until the solution has a weight of about 20 g. The concentrated solution was added dropwise in 300 mL of methanol to reprecipitate a component (free polymer) insoluble in methanol. The free polymer was recovered, dried, and then precisely weighed. The content of free polymer was determined in accordance with the following (equation 2).

Content of free polymer (%) = weight of free polymer/weight of graft copolymer ··· (equation 2)

The following (equation 3) was determined on the basis of Table 2. A graft ratio was determined by the following (equation 4) using the content of gel portion, the content of free polymer, and a charged rate of siloxane.

Charged rate of Siloxane (%) = weight of raw materials concerning only polyorganosiloxane component/total weight of raw materials of graft copolymer ··· (equation 3)

Graft ratio (%) = content of gel portion/((content of gel portion + content of free polymer) × charged rate of siloxane) ··· (equation 4)

[Reduced viscosity]

A free polymer was obtained by separation as in the above method. The free polymer was dissolved in acetone to prepare an acetone solution of 0.2 g/100 $cm^3$. The reduced viscosity of the solution was measured at 30°C.

[Weight-average molecular weight]

A free polymer was obtained by separation as in the above method. The free polymer was dissolved in chloroform to prepare a chloroform solution of about 5 mg/3 mL. The solution was analyzed by gel permeation chromatography (GPC) to determine the weight-average molecular weight (Mw). In the GPC analysis, a GPC system manufactured by Waters Corporation was used. Polystyrene gel columns of Shodex K-806 and K-805 (manufactured by Showa Denko K.K.) were used as the columns and chloroform was used as an eluent. The analysis was performed on the basis of a polystyrene equivalent.

[Impact strength]

The impact strength was evaluated by an Izod test in accordance with American Society for Testing and Materials (ASTM) D-256.

[Flame retardancy]

The flame retardancy was evaluated in accordance with UL94 V test and the result was represented by total flaming in seconds.

[Appearance]

Coloring of moldings for the combustion test was visually observed. White samples were evaluated that coloring was "not observed" and brown-colored samples were evaluated that coloring was "observed".

(Production Example 1) Production of poly(butyl acrylate) seed polymer (SD-1)

In a five-necked flask equipped with a stirrer, a reflux condenser, an inlet for nitrogen, an inlet for adding a monomer, and a thermometer, 400 parts by weight of water and 12 parts by weight (solid content) of a 15 % by weight aqueous solution of sodium dodecylbenzenesulfonate (NEOPELEX G15, available from Kao Corporation) were mixed and the mixture was heated to 50°C. After the temperature of the mixture reached 50°C, purging with nitrogen was performed. Subsequently, butyl acrylate (10 part by weight) and tert-dodecyl mercaptan (3 parts by weight) were added thereto. Thirty minutes later, 0.01 part by weight of p-menthane hydroperoxide (solid content), 0.3 part by weight of sodium formaldehyde sulfoxylate (SFS), 0.01 part by weight of disodium ethylenediaminetetraacetate (EDTA), and 0.0025 part by weight of ferrous sulfate ($FeSO_4 \cdot 7H_2O$) were added and the resulting mixture was stirred for 1 hour.

A mixed solution of 90 parts by weight of butyl acrylate, 27 parts by weight of tert-dodecyl mercaptan, and 0.09 parts by weight of p-menthane hydroperoxide (solid content) was continuously added over 3 hours. Subsequently postpolymerization was performed for 2 hours. Thus, a latex containing a seed polymer (SD-1) having a volume-average particle size of 0.03 μm and a polymerization conversion of 90% (tert-dodecyl mercaptan was considered as a raw material component of monomer) was prepared.

(Production Examples 2 and 3) Productions of polyorganosiloxane particles (S-1 and S-2)

A siloxane emulsion was prepared by stirring with a homomixer at 7,500 rpm for 5 minutes in accordance with the composition shown in Table 1. Separately, the latex of the seed polymer (SD-1) having the solid content of the amount shown in Table 1 was fed in a five-necked flask equipped with a stirrer, a reflux condenser, an inlet for nitrogen, an inlet for adding a monomer, and a thermometer. The above siloxane emulsion was added to this flask at a time. The mixture was heated from 35°C to 80°C over 1 hour in a nitrogen flow while the system was stirred. One part by weight (solid content) of a 10 % by weight aqueous solution of dodecylbenzenesulfonic acid (DBSA, trade name: NEOPELEX GS, available from Kao Corporation) was then added to the mixture. Reaction was performed for 15 hours. The reaction solution was cooled to 25°C and was left to stand for 20 hours. Subsequently, the pH of the system was controlled to 6.5 with a 3 % by weight aqueous solution of sodium hydrogen carbonate to terminate the polymerization. Thus, latices containing polyorganosiloxane particles (S-1 or S-2) were prepared. Table 1 shows the polymerization conversions and measurement results of the volume-average particle size of the latices of the polyorganosiloxane particles.

(Production Example 4) Production of polyorganosiloxane particles (S-3)

A siloxane emulsion was prepared by stirring with a homomixer at 10,000 rpm for 5 minutes in accordance with the composition shown in Table 1 and by allowing the mixture to pass through a high-pressure homogenizer three

times under a pressure of 500 bar. The resulting emulsion was rapidly fed in a five-necked flask equipped with a stirrer, a reflux condenser, an inlet for nitrogen, an inlet for adding a monomer, and a thermometer at a time. Reaction was performed at 30°C for 6 hours with stirring. The reaction solution was then cooled to 23°C and was left to stand for 20 hours. Subsequently, the pH of the system was controlled to 6.8 with a 3 % by weight aqueous solution of sodium hydrogen carbonate to terminate the polymerization. Thus, a latex containing polyorganosiloxane particles (S-3) was prepared. Table 1 shows the polymerization conversion and measurement result of the volume-average particle size of the latex of the polyorganosiloxane particles.

TABLE 1

| Production Examples | | | | 2 | 3 | 4 |
|---|---|---|---|---|---|---|
| Polyorganosiloxane particles | | | | S-1 | S-2 | S-3 |
| | Seed polymer | SD-1 | Parts | 2 | 2 | - |
| | Siloxane emulsion | Ion-exchange water | Parts | 280 | 280 | 200 |
| | | SDBS | Parts | 0.5 | 0.5 | 1 |
| | | DBSA | Parts | - | - | 1 |
| | | D4 | Parts | 93 | 93 | - |
| | | DHPDMS | Parts | - | - | 97.5 |
| | | DSMA | Parts | 5 | - | 2.5 |
| | | MPrDMS | Parts | - | 5 | - |
| | Polymerization catalyst | DBSA | Parts | 1 | 1 | - |
| Polymerization conversion | | | | 86 % | 86 % | 97 % |
| Volume-average particle size | | | μm | 0.23 | 0.24 | 0.28 |

SDBS: Sodium alkylbenzenesulfonate (an average chain length of an alkyl group: 12)
DBSA: Dodecylbenzenesulfonic acid
D4: Octamethylcyclotetrasiloxane
DHPDMS: Dihydroxy-terminated polydimethylsiloxane having an average molecular weight of 2,000
DSMA: γ-methacryloyloxypropylmethyldimethoxysilane
MPrDMS: mercaptopropyldimethoxymethylsilane

EXAMPLES 1 to 15

Polyorganosiloxane-containing graft copolymers (SG-1 to SG-15)

In a five-necked flask equipped with a stirrer, a reflux condenser, an inlet for nitrogen, an inlet for adding a monomer, and a thermometer, 240 parts by weight of ion-exchange water (which includes water derived from a latex containing organosiloxane particles) and the polyorganosiloxane particles (S-1 to S-3) prepared in Production Examples 2 to 4 were fed in an amount shown in Table 2 (the amount in Table 2 corresponds to the solid content). The mixture was heated to the temperature shown in Table 2 in a nitrogen flow while the system was stirred. When 1 hour passed after the temperature reached the temperature shown in Table 2, 0.25 part by weight of sodium formaldehyde sulfoxylate (SFS), 0.002 part by weight of disodium ethylenediaminetetraacetate (EDTA), and 0.0005 part by weight of ferrous sulfate were added. Subsequently, a mixture (MG-1) of graft monomer having the composition in Table 2 was added at a time. Stirring was continued for 30 minutes.

Subsequently, 0.04 part by weight of cumene hydroperoxide was further added and the mixture was stirred for 30 minutes. A mixture (MG-2) of graft monomer having the composition in Table 2 was added dropwise at a rate of 20 parts by weight/hour. In the case where components are further added, one hour later of the completion of the addition, a mixture (MG-3) of graft monomer having the composition in Table 2 was added dropwise at a rate of 20 parts by weight/hour. After the addition of the mixture MG-2 or MG-3 was completed, stirring was further continued for 2 hours. 0.05 part by weight of Cumene hydroperoxide was further added and stirring was then continued for 30 minutes. Thus, latices of polyorganosiloxane-containing graft copolymers (SG-1 to SG-15) were prepared. Table 2 shows the polymerization conversion of all the graft components and measurement results of the volume-average particle size of the latices. The term "parts" in the tables below represents "parts by weight".

Ion-exchange water was added to each of the resulting latices so that the solid content became 15 % by weight. Subsequently, 4 parts by weight (solid content) of a 2.5 % by weight aqueous solution of calcium chloride was added to prepare a coagulated slurry. Water was further added so that the solid content became 12 % by weight. The resulting slurry was heated to 95°C, kept at 95°C for 2 minutes, and then cooled to 50°C. The slurry was dehydrated, washed with fifteen times water based on the amount of the resin, and then dried. Thus, powders of polyorganosiloxane-containing graft copolymers were prepared. Table 2 shows the analytic results of the graft ratio, the reduced viscosity, and the weight-average molecular weight.

TABLE 2

| | | | Examples | | | | | | | | | | | | | | |
|---|---|---|---|---|---|---|---|---|---|---|---|---|---|---|---|---|---|
| | | | 1* | 2* | 3 | 4* | 5 | 6 | 7* | 8 | 9* | 10 | 11* | 12* | 13 | 14* | 15* |
| Polyorganosiloxane-containing graft copolymer | | | SG-1 | SG-2 | SG-3 | SG-4 | SG-5 | SG-6 | SG-7 | SG-8 | SG-9 | SG-10 | SG-11 | SG-12 | SG-13 | SG-14 | SG-15 |
| Polyorganosiloxane particles | S-1 | Parts | 78 | 88 | 88 | 93 | - | - | - | - | - | - | - | - | - | - | - |
| | S-2 | Parts | - | - | - | - | 78 | - | - | - | - | - | - | - | - | - | - |
| | S-3 | Parts | - | - | - | - | - | 78.5 | 85 | 84.5 | 83.5 | 83.5 | 83.5 | 83.5 | 88 | 79 | 80 |
| Polymerization temperature | | °C | 60 | 60 | 60 | 60 | 60 | 60 | 60 | 60 | 60 | 60 | 60 | 60 | 60 | 60 | 60 |
| Graft monomer First stage (MG-1) | TAIC | Parts | 2 | 2 | 2 | 2 | 2 | 2 | 0.5 | 1 | 2 | 2 | 2 | 2 | 2 | 6 | - |
| | TAC | Parts | - | - | - | - | - | - | - | - | - | - | - | - | - | - | 5 |
| | AIMA | Parts | - | - | - | - | - | - | - | - | - | - | - | - | - | - | - |
| | CHP | Parts | 0.05 | 0.05 | 0.05 | 0.05 | 0.05 | 0.05 | 0.0125 | 0.025 | 0.05 | 0.05 | 0.05 | 0.05 | 0.05 | 0.15 | 0.13 |
| Graft monomer Second stage (MG-2) | MMA | Parts | 20 | 10 | 10 | 5 | 20 | 19.5 | 14.5 | 14.5 | 14.5 | 14.5 | - | 14.5 | 10 | 15 | 15 |
| | BA | Parts | - | - | - | - | - | - | - | - | - | - | 1.5 | - | - | - | - |
| | 2EHTG | Parts | 0.01 | - | 0.08 | 0.04 | 0.02 | 0.08 | 0.06 | 0.06 | - | 0.06 | 0.01 | 0.73 | 0.04 | 0.06 | 0.06 |
| | CHP | Parts | 0.2 | 0.1 | 0.1 | 0.05 | 0.2 | 0.195 | 0.145 | 0.145 | 0.145 | 0.145 | 0.015 | 0.145 | 0.1 | 0.15 | 0.15 |
| | Tg | °C | 105 | 105 | 105 | 105 | 105 | 105 | 105 | 105 | 105 | 105 | -54 | 105 | 105 | 105 | 105 |
| Graft monomer Third stage (MG-3) | MMA | Parts | - | - | - | - | - | - | - | - | - | - | 13 | - | - | - | - |
| | 2EHTG | Parts | - | - | - | - | - | - | - | - | - | - | 0.05 | - | - | - | - |
| | CHP | Parts | - | - | - | - | - | - | - | - | - | - | 0.13 | - | - | - | - |
| | Tg | °C | - | - | - | - | - | - | - | - | - | - | 105 | | - | - | - |
| Polymerization conversion (only graft components) | | | 99 % | 100 % | 100 % | 100 % | 100 % | 100 % | 100 % | 100 % | 100 % | 100 % | 100 % | 100 % | 100 % | 100 % | 100 % |
| Volume-average particle size | | μm | 0.30 | 0.29 | 0.29 | 0.29 | 0.30 | 0.30 | 0.30 | 0.30 | 0.30 | 0.30 | 0.30 | 0.30 | 0.29 | 0.30 | 0.30 |
| Graft ratio | | | 1.22 | 1.11 | 1.10 | 1.05 | 1.20 | 1.19 | 1.05 | 1.08 | 1.13 | 1.12 | 1.09 | 1.09 | 1.10 | 1.25 | 1.23 |
| Reduced viscosity | | dl/g | 0.11 | 0.09 | 0.08 | 0.04 | 0.12 | 0.08 | 0.08 | 0.08 | 0.09 | 0.08 | 0.07 | 0.07 | 0.08 | 0.07 | 0.07 |

(continued)

| Polyorganosiloxane-containing graft copolymer | | SG-1 | SG-2 | SG-3 | SG-4 | SG-5 | SG-6 | SG-7 | SG-8 | SG-9 | SG-10 | SG-11 | SG-12 | SG-13 | SG-14 | SG-15 |
|---|---|---|---|---|---|---|---|---|---|---|---|---|---|---|---|---|
| Weight-average weight molecular weight | | 181,000 | 132,000 | 98,000 | 49,000 | 178,000 | 126,000 | 145,000 | 135,000 | 162,000 | 112,000 | 73,000 | 38,000 | 108,000 | 39,000 | 41,000 |

TAIC: Triallyl isocyanurate TAC: Triallyl cyanurate *reference example
AIMA: Allyl methacrylate MMA: Methyl methacrylate
BA: Butyl acrylate CHP: Cumene hydroperoxide
2EHTG: 2-ethylhexyl thioglycolate

COMPARATIVE EXAMPLES 1 to 6 Polyorganosiloxane-containing graft copolymers (SG'-1 to SG'-6)

Polyorganosiloxane-containing graft copolymers (SG'-1 to SG'-6) were prepared in the same manner as in Examples 2, 6, and 9 in accordance with the raw materials and the charge amount shown in Table 3. Table 3 shows the analytic results of the polymerization conversion of all the graft components, the volume-average particle size of the latices, the graft ratio, the reduced viscosity, and the weight-average molecular weight.

TABLE 3

| | | | Comparative Examples | | | | | |
|---|---|---|---|---|---|---|---|---|
| | | | 1 | 2 | 3 | 4 | 5 | 6 |
| Polyorganosiloxane-containing graft copolymer | | | SG'-1 | SG'-2 | SG'-3 | SG'-4 | SG'-5 | SG'-6 |
| Polyorganosiloxane particles | S-1 | Parts | 90 | 88 | - | - | - | - |
| | S-2 | Parts | - | - | 80 | 78 | - | - |
| | S-3 | Parts | - | - | - | - | 90 | 88 |
| Polymerization temperature | | °C | 60 | 60 | 60 | 60 | 60 | 60 |
| Graft monomer First stage (MG-1) | TAIC | Parts | - | - | - | - | - | - |
| | TAC | Parts | - | - | - | - | - | - |
| | AIMA | Parts | - | 2 | - | 2 | - | 2 |
| | CHP | Parts | - | 0.1 | - | 0.1 | - | 0.1 |
| Graft monomer Second stage (MG-2) | MMA | Parts | 10 | 10 | 20 | 20 | 10 | 10 |
| | BA | Parts | - | - | - | - | - | - |
| | 2EHTG | Parts | - | - | - | - | - | - |
| | CHP | Parts | 0.1 | 0.1 | 0.2 | 0.2 | 0.1 | 0.1 |
| | Tg | °C | 105 | 105 | 105 | 105 | 105 | 105 |
| Graft monomer Third stage (MG-3) | MMA | Parts | - | - | - | - | - | - |
| | 2EHTG | Parts | - | - | - | - | - | - |
| | CHP | Parts | - | - | - | - | - | - |
| | Tg | °C | - | - | - | - | - | - |
| Polymerization conversion (only graft components) | | | 100 % | 100 % | 99 % | 99% | 100% | 99% |
| Volume-average particle size | | µm | 0.23 | 0.23 | 0.41 | 0.40 | 0.28 | 0.29 |
| Graft ratio | | | 1.06 | 1.08 | 1.02 | 1.17 | 1.07 | 1.09 |
| Reduced viscosity | | dl/g | 0.54 | 0.37 | 0.46 | 0.36 | 0.42 | 0.33 |

(continued)

| Polyorganosiloxane-containing graft copolymer | | SG'-1 | SG'-2 | SG'-3 | SG'-4 | SG'-5 | SG'-6 |
|---|---|---|---|---|---|---|---|
| Weight-average molecular weight | | 780,000 | 556,000 | 651,000 | 510,000 | 586,000 | 495,000 |

TAIC: Triallyl isocyanurate
TAC: Triallyl cyanurate
AIMA: Allyl methacrylate
MMA: Methyl methacrylate
BA: Butyl acrylate
CHP: Cumene hydroperoxide
2EHTG: 2-ethylhexyl thioglycolate

EXAMPLES 16 to 37 and COMPARATIVE EXAMPLES 7 to 14 Flameproofing of polycarbonate resin

0 or 3 parts by weight of the powders of the polyorganosiloxane-containing graft copolymers shown in Table 2 and Table 3 was blended with 0.4 part by weight of polytetrafluoroethylene (trade name: POLYFLON FA-500, available from Daikin Industries, Ltd.), 0 or 0.03 part by weight of an antioxidant (a mixture of 2,4-dimethyl-6-(1-methylpentadecyl) phenol and octadecyl-3-(3,5-di-tert-butyl-4-hydroxyphenyl)propionate, trade name: IRGANOX 1141, available from Ciba Specialty Chemicals), a sulfur-containing organometallic salt (sodium alkylbenzene sulfonate (having an alkyl group with an average chain length of 12) (trade name: NEOPELEX G-15, available from Kao Corporation) in the amount shown in Table 4, and 100 parts by weight of a polycarbonate resin (trade name: PANLITE L1225WX, available from Teijin Chemicals Ltd.). Each of the resulting mixtures was melt-kneaded with a twin-screw extruder (TEX44SS available from The Japan Steel Works, Ltd.) at 260°C to prepare pellets. The pellets were molded into 1/20 inch test pieces for flame retardancy evaluation and 1/8 inch test pieces for impact strength evaluation with an FAS100B injection molding machine manufactured by FANUC Ltd. at a cylinder temperature of 280°C. The test pieces were evaluated in accordance with the above evaluation methods. Table 4 shows the results of the impact strength (at 0°C) and the flame retardancy of the moldings.

TABLE 4

| | | | | Examples | | | | | | | | | | |
|---|---|---|---|---|---|---|---|---|---|---|---|---|---|---|
| | | | | 16* | 17* | 18 | 19 | 20 | 21* | 22 | 23 | 24* | 25 | 26* |
| Polycarbonate | | | Parts | 100 | 100 | 100 | 100 | 100 | 100 | 100 | 100 | 100 | 100 | 100 |
| Organopolysiloxane-containing graft copolymer composition | | | | SG-1 | SG-2 | SG-3 | SG-3 | SG-3 | SG-4 | SG-5 | SG-6 | SG-7 | SG-8 | SG-9 |
| | | | Parts | 3 | 3 | 3 | 3 | 3 | 3 | 3 | 3 | 3 | 3 | 3 |
| PTFE | | | Parts | 0.4 | 0.4 | 0.4 | 0.4 | 0.4 | 0.4 | 0.4 | 0.4 | 0.4 | 0.4 | 0.4 |
| SDBS | | | Parts | - | - | - | 0.01 | - | - | 0.01 | - | - | - | - |
| Antioxidant : IRGANOX1141 | | | Parts | - | - | - | - | 0.03 | - | - | - | - | - | - |
| Physical property | Flame retardancy (1/20 inch) | Total flaming | Seconds | 51 | 51 | 47 | 30 | 33 | 45 | 47 | 47 | 53 | 50 | 49 |
| | | Dripping | | Not occurred | Not occurred | Not occurred | Not occurred | Not occurred | Not occurred | Not occurred | Not occurred | Not occurred | Not occurred | Not occurred |
| | Impact strength (Izod strength) | 1/8 inch 0°C | kJ/m² | 42 | 46 | 49 | 49 | 50 | 38 | 52 | 40 | 45 | 48 | 44 |
| | | | | Examples | | | | | | | | | | |
| | | | | 27 | 28 | 29 | 30 | 31 | 32* | 33* | 34 | 35 | 36* | 37* |
| Polycarbonate | | | Parts | 100 | 100 | 100 | 100 | 100 | 100 | 100 | 100 | 100 | 100 | 100 |
| Organopolysiloxane-containing graft copolymer composition | | | | SG-10 | SG-10 | SG-10 | SG-10 | SG-10 | SG-11 | SG-12 | SG-13 | SG-13 | SG-14 | SG-15 |
| | | | Parts | 3 | 3 | 3 | 3 | 3 | 3 | 3 | 3 | 3 | 3 | 3 |
| PTFE | | | Parts | 0.4 | 0.4 | 0.4 | 0.4 | 0.4 | 0.4 | 0.4 | 0.4 | 0.4 | 0.4 | 0.4 |
| SDBS | | | Parts | - | 0.01 | 0.03 | 0.01 | - | - | - | - | 0.01 | - | - |
| Antioxidant : IRGANOX1141 | | | Parts | - | - | - | 0.03 | 0.03 | - | - | - | - | - | - |
| Physical property | Flame retardancy (1/20 inch) | Total flaming | Seconds | 43 | 29 | 30 | 31 | 31 | 85 | 49 | 41 | 32 | 54 | 56 |
| | | Dripping | | Not occurred | Not occurred | Not occurred | Not occurred | Not occurred | Occurred | Not occurred | Not occurred | Not occurred | Not occurred | Not occurred |
| | Impact strength (Izod strength) | 1/8 inch 0°C | kJ/m² | 52 | 52 | 47 | 46 | 48 | 41 | 36 | 49 | 49 | 34 | 36 |

*: reference example

- continued -

- continued -

| | | | Comparative Examples | | | | | | | |
|---|---|---|---|---|---|---|---|---|---|---|
| | | | 7 | 8 | 9 | 10 | 11 | 12 | 13 | 14 |
| Polycarbonate | | Parts | 100 | 100 | 100 | 100 | 100 | 100 | 100 | 100 |
| Organopolysiloxane-containing graft copolymer composition | | | SG'-1 | SG'-2 | SG'-3 | SG'-4 | SG'-5 | SG'-6 | - | - |
| | | Parts | 3 | 3 | 3 | 3 | 3 | 3 | - | - |
| PTFE | | Parts | 0.4 | 0.4 | 0.4 | 0.4 | 0.4 | 0.4 | 0.4 | 0.4 |
| SDBS | | Parts | - | - | - | - | - | - | - | 0.02 |
| Antioxidant : IRGANOX1141 | | Parts | - | - | - | - | - | - | - | - |
| Physical property | Flame retardancy (1/20 inch) | Total flaming Seconds | 174 | 108 | 232 | 102 | 168 | 111 | 177 | 37 |
| | | Dripping | Occurred | Not occurred | Occurred | Not occurred | Occurred | Not occurred | Occurred | Not occurred |
| | Impact strength (Izod strength) | 1/8 inch 0°C kJ/m² | 14 | 19 | 23 | 33 | 18 | 21 | 9.4 | 6.9 |

As shown in Table 4, when the copolymers of the examples were used, both the flame retardancy and the impact strength were superior to those of the comparative examples.

EXAMPLES 38 to 41 and COMPARATIVE EXAMPLES 15 to 17 Flameproofing of polycarbonate/ABS resin

0 or 5 part by weight of a powder of polyorganosiloxane-containing graft copolymer shown in Table 5, an MBS resin (trade name: Kane Ace B-564, available from Kaneka Corporation), which was a commercially available impact modifier, or a commercially available acrylic impact modifier (trade name: Kane Ace M-580, available from Kaneka Corporation) was blended with 0.5 parts by weight of polytetrafluoroethylene (trade name: POLYFLON FA-500, available from Daikin Industries, Ltd.), 1 part by weight of a commercially available pigment (product number: 42-120A, available from Tokan Material Technology Co., Ltd.), a phenolic antioxidant (trade name: AO-60, manufactured by Asahi Denka Co., Ltd.), a phosphorus antioxidant (trade name: HP-10, available from Asahi Denka Co., Ltd.), 80 parts by weight of a polycarbonate resin (trade name: TARFLON A2200, available from Idemitsu Kosan Co., Ltd.), and 20 parts by weight of an ABS resin (trade name: SANTAC AT-08, available from Nippon A&L Inc.).

Each of the resulting mixtures was melt-kneaded with a twin-screw extruder (TEX44SS available from The Japan Steel Works, Ltd.) at 250°C to prepare pellets. The pellets were molded into 1/8 inch test pieces for flame retardancy evaluation and 1/4 inch test pieces for impact strength evaluation with an FAS100B injection molding machine manufactured by FANUC Ltd. at a cylinder temperature of 300°C. The test pieces were evaluated in accordance with the above evaluation methods. Table 5 shows the impact strength (at -30°C and 23°C) and the flame retardancy of the moldings, and results of the presence or absence of coloring due to tanning of the test pieces by visual observation.

TABLE 5

<table>
<tr><td colspan="4" rowspan="2"></td><td colspan="4">Examples</td></tr>
<tr><td>38</td><td>39*</td><td>40</td><td>41*</td></tr>
<tr><td colspan="3">Polycarbonate</td><td>Parts</td><td>80</td><td>80</td><td>80</td><td>80</td></tr>
<tr><td colspan="3">ABS</td><td>Parts</td><td>20</td><td>20</td><td>20</td><td>20</td></tr>
<tr><td colspan="3" rowspan="2">Organopolysiloxane-containing graft copolymer composition</td><td></td><td>SG-3</td><td>SG-9</td><td>SG-10</td><td>SG-12</td></tr>
<tr><td>Parts</td><td>5</td><td>5</td><td>5</td><td>5</td></tr>
<tr><td colspan="3">PTFE</td><td>Parts</td><td>0.5</td><td>0.5</td><td>0.5</td><td>0.5</td></tr>
<tr><td rowspan="2">Antioxidant</td><td colspan="2">AO-60</td><td>Parts</td><td>0.2</td><td>0.2</td><td>0.2</td><td>0.2</td></tr>
<tr><td colspan="2">HP-10</td><td>Parts</td><td>0.2</td><td>0.2</td><td>0.2</td><td>0.2</td></tr>
<tr><td rowspan="5">Physical property</td><td rowspan="2">Flame retardancy (1/8 inch)</td><td>Total flaming</td><td>Seconds</td><td>103</td><td>167</td><td>112</td><td>135</td></tr>
<tr><td>Dripping</td><td></td><td>Not occurred</td><td>Occurred</td><td>Not occurred</td><td>Not occurred</td></tr>
<tr><td rowspan="2">Impact strength (Izod strength)</td><td>1/4 inch 23°C</td><td>$kJ/m^2$</td><td>14.8</td><td>14.4</td><td>15.0</td><td>14.8</td></tr>
<tr><td>1/4 inch -30°C</td><td>$kJ/m^2$</td><td>9.5</td><td>9.0</td><td>10.3</td><td>10.2</td></tr>
<tr><td>Appearance</td><td>Coloring</td><td></td><td>Not observed</td><td>Not observed</td><td>Not observed</td><td>Not observed</td></tr>
<tr><td colspan="4" rowspan="2"></td><td colspan="3">Comparative Examples</td><td rowspan="9"></td></tr>
<tr><td>15</td><td>16</td><td>17</td></tr>
<tr><td colspan="3">Polycarbonate</td><td>Parts</td><td>80</td><td>80</td><td>80</td></tr>
<tr><td colspan="3">ABS</td><td>Parts</td><td>20</td><td>20</td><td>20</td></tr>
<tr><td colspan="3" rowspan="2">Impact modifier</td><td></td><td>-</td><td>B-564</td><td>B-580</td></tr>
<tr><td>Parts</td><td>0</td><td>5</td><td>5</td></tr>
<tr><td colspan="3">PTFE</td><td>Parts</td><td>0.5</td><td>0.5</td><td>0.5</td></tr>
<tr><td rowspan="2">Antioxidant</td><td colspan="2">AO-60</td><td>Parts</td><td>0.2</td><td>0.2</td><td>0.2</td></tr>
<tr><td colspan="2">HP-10</td><td>Parts</td><td>0.2</td><td>0.2</td><td>0.2</td></tr>
</table>

(continued)

| | | | | Examples | | | |
|---|---|---|---|---|---|---|---|
| | | | | 38 | 39* | 40 | 41* |
| Physical property | Flame retardancy (1/8 inch) | Total flaming | Seconds | 446 | 291 | 188 | |
| | | Dropping | | Occurred | Occurred | Occurred | |
| | Impact strength (Izod strength) | 1/4 inch 23°C | $kJ/m^2$ | 8.0 | 11.0 | .4 | |
| | | 1/4 inch -30°C | $kJ/m^2$ | 3.0 | 1.6 | 4.2 | |
| | Appearance | Coloring | | Not observed | Observed | Observed | |
| PTFE: Polytetrafluoroethylene<br>*: reference example | | | | | | | |

As shown in Table 5, when the copolymers of the examples were used, the flame retardancy, the impact strength, and the appearance of the moldings were superior to those of the comparative examples.

EXAMPLES 42 to 47 and COMPARATIVE EXAMPLES 18 and 19 Flameproofing of polycarbonate/polyester resin

0 or 3 parts by weight of a powder of polyorganosiloxane-containing graft copolymer shown in Table 6 was blended with 0.5 part by weight of polytetrafluoroethylene (trade name: POLYFLON FA-500, available from Daikin Industries, Ltd.), 80 parts by weight of a polycarbonate resin (trade name: TARFLON A2200, available from Idemitsu Kosan Co., Ltd.), and a polyethylene terephthalate resin (recycled product, available from Kaneka Corporation, in-house product) or 20 parts by weight of a polybutylene terephthalate resin (trade name: NOVADURAN 5010R5, available from Mitsubishi Engineering-Plastics Corporation). Each of the resulting mixtures was melt-kneaded with a twin-screw extruder (TEX44SS available from The Japan Steel Works, Ltd.) at 250°C to prepare pellets.

The pellets were molded into 1/16 inch test pieces for flame retardancy evaluation and 1/4 inch test pieces for impact strength evaluation with an FAS100B injection molding machine manufactured by FANUC Ltd. at a cylinder temperature of 300°C. The test pieces were evaluated in accordance with the above evaluation methods. Table 6 shows the evaluation results of the impact strength and the flame retardancy of the moldings.

TABLE 6

| | | | | Examples | | | | | |
|---|---|---|---|---|---|---|---|---|---|
| | | | | 42* | 43* | 44 | 45 | 46* | 47* |
| Polycarbonate | | | Parts | 80 | 80 | 80 | 80 | 80 | 80 |
| PET | | | Parts | 20 | - | 20 | - | 20 | - |
| PBT | | | Parts | - | 20 | - | 20 | - | 20 |
| Organopolysiloxane-containing graft copolymer composition | | | | SG-9 | SG-9 | SG-10 | SG-10 | SG-12 | SG-12 |
| | | | Parts | 3 | 3 | 3 | 3 | 3 | 3 |
| PTFE | | | Parts | 0.5 | 0.5 | 0.5 | 0.5 | 0.5 | 0.5 |
| Antioxidant | AO-60 | | Parts | 0.2 | 0.2 | 0.2 | 0.2 | 0.2 | 0.2 |
| | HP-10 | | Parts | 0.2 | 0.2 | 0.2 | 0.2 | 0.2 | 0.2 |
| Physical property | Flame retardancy (1/16 inch) | Total | Seconds | 150 | 139 | 127 | 131 | 134 | 130 |
| | | Dripping | | Not occurred | Not occurred | Not occurred | Not occurred | Not occurred | Not occurred |
| | Impact strength (Izod strength) | 1/4 inch 23°C | $kJ/m^2$ | 52 | 52 | 37 | 49 | 54 | 66 |

| | | | | Comparative | Examples |
|---|---|---|---|---|---|
| | | | | 18 | 19 |
| Polycarbonate | | | Parts | 80 | 80 |
| PET | | | Parts | 20 | - |
| PBT | | | Parts | - | 20 |
| Organopolysiloxane-containing graft copolymer composition | | | | - | - |
| | | | Parts | 0 | 0 |
| PTFE | | | Parts | 0.5 | 0.5 |
| Antioxidant | AO-60 | | Parts | 0.2 | 0.2 |
| | HP-10 | | Parts | 0.2 | 0.2 |

(continued)

| | | | | Comparative | Examples |
|---|---|---|---|---|---|
| | | | | 18 | 19 |
| Physical property | Flame retardancy (1/16 inch) | Total flaming | Seconds | 380 | 400 |
| | | Dripping | | Occurred | Occurred |
| | Impact strength (Izod strength) | 1/4 inch 23°C | $kJ/m^2$ | 4.1 | 3.9 |

*: reference example

As shown in Table 6, when the copolymers of the examples were used, both the flame retardancy and the impact strength were superior to those of the comparative examples.

EXAMPLES 48 to 52 and COMPARATIVE EXAMPLES 20 to 24 Flameproofing of polycarbonate resin

The evaluation was performed in the same manner as in Example 28 except that, in place of the sodium alkylbenzene sulfonate in Example 28, sodium benzenesulfonate (reagent grade, available from Tokyo Kasei Kogyo Co., Ltd.), sodium p-toluenesulfonate (reagent grade, available from Tokyo Kasei Kogyo Co., Ltd.), sodium xylenesulfonate (trade name TAYCATOX N1140, available from Tayca Corporation), or sodium cumenesulfonate (trade name TAYCATOX N5040, available from Tayca Corporation) was used in the amount shown in Table 7. Table 7 shows the evaluation results of the impact strength and the flame retardancy of the moldings.

TABLE 7

| | | | | Examples | | | | | | |
|---|---|---|---|---|---|---|---|---|---|---|
| | | | | 27 | 28 | 48 | 49 | 50 | 51 | 52 |
| Polycarbonate | | | Parts | 100 | 100 | 100 | 100 | 100 | 100 | 100 |
| Organopolysiloxane-containing graft copolymer composition | | | | SG-10 | SG-10 | SG-10 | SG-10 | SG-10 | SG-10 | SG-10 |
| | | | Parts | 3 | 3 | 3 | 3 | 3 | 5 | 3 |
| PTFE | | | Parts | 0.4 | 0.4 | 0.4 | 0.4 | 0.4 | 0.4 | 0.4 |
| SDBS | | | Parts | - | 0.01 | - | - | - | - | - |
| SBS | | | Parts | - | - | 0.005 | - | - | - | - |
| STS | | | Parts | - | - | - | 0.006 | - | - | - |
| SXS | | | Parts | - | - | - | - | 0.006 | 0.006 | - |
| SCS | | | Parts | - | - | - | - | - | - | 0.006 |
| Physical property | Flame retardancy (1/20 inch) | Total flaming | Seconds | 43 | 29 | 32 | 30 | 29 | 33 | 28 |
| | | Dripping | | Not occurred | Not occurred | Not occurred | Not occurred | Not occurred | Not occurred | Not occurred |
| | Impact strength (Izod strength) | 1/4 inch 23°C | $kJ/m^2$ | 52 | 52 | 37 | 49 | 54 | 66 | 53 |
| | | | | Comparative Examples | | | | | | |
| | | | | 13 | 20 | 21 | 22 | 23 | 24 | |
| Polycarbonate | | | Parts | 100 | 100 | 100 | 100 | 100 | 100 | |
| Organopolysiloxane-based graft copolymer composition | | | | - | - | - | - | - | - | |
| | | | Parts | - | - | - | - | - | - | |
| PTFE | | | Parts | 0.4 | 0.4 | 0.4 | 0.4 | 0.4 | 0.4 | |
| SDBS | | | | - | 0.01 | - | - | - | - | |

(continued)

| | | | | Comparative Examples | | | | | |
|---|---|---|---|---|---|---|---|---|---|
| | | | | 13 | 20 | 21 | 22 | 23 | 24 |
| SBS | | | | - | - | 0.005 | - | - | - |
| STS | | | | - | - | - | 0.006 | - | - |
| SXS | | | | - | - | - | - | 0.006 | - |
| SCS | | | | - | - | - | - | - | 0.006 |
| Physical property | Flame retardancy (1/20inch) | Total flaming | Seconds | 177 | 40 | 41 | 38 | 33 | 34 |
| | | Dripping | | Occurred | Occurred | Occurred | Occurred | Occurred | Occurred |
| | Impact strength (Izod strength) | 1/4 inch 23°C | $kJ/m^2$ | 9.4 | 7.0 | 4.7 | 7.2 | 7.0 | 7.4 |

PTFE: Polytetrafluoroethylene
SDBS: Sodium alkylbenzenesulfonate (an average chain length of an alkyl group: 12)
SBS: sodium benzenesulfonate
STS: sodium p-toluenesulfonate
SXS: sodium xylenesulfonate
SCS: sodium cumenesulfonate

As shown in Table 7, when the copolymers of the examples were used, both the flame retardancy and the impact strength were superior to those of the comparative examples.

## Claims

1. A polyorganosiloxane-containing graft copolymer obtainable by forming a polymer (C) segment by polymerizing a nitrogen-atom-containing multifunctional monomer (B) having two or more radically polymerizable groups in its molecule alone or as a mixture containing another monomer copolymerizable with the monomer (B), wherein the content of the monomer (B) in the mixture is at least 80 % by weight, in at least one stage in the presence of a polyorganosiloxane (A), and further forming a polymer (E) segment by polymerizing an ethylenically unsaturated monomer (D) the homopolymer of which has a glass transition temperature of 40°C or higher, wherein the content of the polyorganosiloxane (A) segment is 65 % by weight or more on the basis of the graft copolymer, wherein the nitrogen-atom-containing monomer (B) is a cyanuric acid derivative and/or an isocyanuric acid derivative, wherein the polymer (E) segment is polymerized by using at least 0.1 % and not more than 2 % by weight of mercaptans as a chain transfer agent based on the ethylenically unsaturated monomer (D), wherein the content of the monomers constituting the polymer (C) segment is 1 to 5 % by weight based on that the total amount of siloxane and monomer units that constitute the copolymer is defined as 100 % by weight, and wherein a component soluble in 2-butanone and insoluble in methanol, which is contained in the graft copolymer, has a weight-average molecular weight of at least 50,000.

2. The graft copolymer according to claim 1,
wherein the graft ratio of the graft copolymer is 1.001 to 1.280.

3. The graft copolymer according to any one of claims 1 and 2, wherein a component soluble in 2-butanone and insoluble in methanol, which is contained in the graft copolymer, has a reduced viscosity of 0.01 to 0.8 dl/g measured under a condition of an acetone solution of 0.2 g/ 100 $cm^3$ at 30°C.

4. The graft copolymer according to any one of claims 1 to 3, wherein a component soluble in 2-butanone and insoluble in methanol, which is contained in the graft copolymer, has a weight-average molecular weight of 1,000,000 or less, determined by GPC.

5. A method for producing a graft copolymer comprising a step of performing a salt coagulation of a latex containing the graft copolymer according to any one of claims 1 to 4.

6. The method for producing a graft copolymer according to claim 5, further comprising a step of washing the graft copolymer after the salt coagulation of the latex containing the graft copolymer.

7. The method for producing a graft copolymer according to claim 5, further comprising a step of diluting a dispersion liquid containing the graft copolymer after the salt coagulation of the latex containing the graft copolymer.

8. A method for producing a graft copolymer, further comprising steps washing the graft copolymer, and/or adding a divalent or higher-valent metal salt after spray-drying a latex containing the graft copolymer according to any one of claims 1 to 4.

9. A resin composition containing a graft copolymer, comprising the graft copolymer according to any one of claims 1 to 4 and at least one selected from the group consisting of a thermoplastic resin, a thermosetting resin, and an elastomer.

10. The resin composition containing a graft copolymer according to claim 9, wherein the thermoplastic resin is at least one selected from polycarbonate resins; polyester resins; polyestercarbonate resins; polyphenylene ether resins; polyphenylene sulfide resins; polysulfone resins; polyethersulfone resins; polyarylene resins; polyamide resins; polyetherimide resins; polyacetal resins; polyvinyl acetal resins; polyketone resins; polyetherketone resins; polyetheretherketone resins; polyarylketone resins; polyethernitrile resins; liquid crystal resins; polybenzimidazole resins; polyparabanic acid resins; vinyl polymer or copolymer resins each prepared by polymerizing or copolymerizing at least one vinyl monomer selected from the group consisting of aromatic alkenyl compounds, methacrylic esters, acrylic esters, and vinyl cyanide compounds; diene-aromatic alkenyl compound copolymer resins; vinyl cyanide-diene-aromatic alkenyl compound copolymer resins; aromatic alkenyl compound-diene-vinyl cyanide-N-phenylmaleimide copolymer resins; vinyl cyanide-(ethylene-diene-propylene (EPDM))-aromatic alkenyl compound copolymer resins; polyolefins; vinyl chloride resins; and chlorinated vinyl chloride resins.

**11.** The resin composition containing a graft copolymer according to claim 9, wherein the thermosetting resin is at least one selected from phenolic resins, epoxy resins, urea resins, melamine resins, polyimide resins, polyamide-imide resins, thermosetting polyester resins, alkyd resins, silicone resins, urethane resins, polyvinylester resins, poly(diallyl phthalate) resins, bismaleimide-triazine resins, furan resins, xylene resins, guanamine resins, maleic resins, and dicyclopentadiene resins.

**12.** The resin composition containing a graft copolymer according to claim 9, wherein the elastomer is at least one selected from natural rubbers and synthetic rubbers.

**13.** The resin composition containing a graft copolymer according to claim 10, comprising an aromatic polycarbonate.

**14.** The resin composition containing a graft copolymer according to claim 13, further comprising a sulfur-containing organometallic salt.

**15.** The resin composition containing a graft copolymer according to any one of claims 9 to 14, further comprising an antioxidant

## Patentansprüche

**1.** Ein Polyorganosiloxan enthaltendes Pfropfcopolymer, erhältlich durch Formen eines Polymersegments (C) durch Polymerisieren eines ein Stickstoffatom enthaltenden multifunktionellen Monomers (B), das zwei oder mehr radikalisch polymerisierbare Reste in seinem Molekül aufweist, allein oder als ein Gemisch, das ein weiteres mit dem Monomer (B) copolymerisierbares Monomer enthält, wobei der Gehalt an dem Monomer (B) in dem Gemisch mindestens 80 Gew.-% beträgt, in mindestens einer Stufe in Gegenwart eines Polyorganosiloxans (A), und ferner Formen eines Polymersegments (E) durch Polymerisieren eines ethylenisch ungesättigten Monomers (D), dessen Homopolymer eine Glasübergangstemperatur von 40°C oder höher aufweist, wobei der Gehalt an Polyorganosiloxansegment (A) 65 Gew.-% oder mehr auf Basis des Pfropfcopolymers beträgt, wobei das ein Stickstoffatom enthaltende Monomer (B) ein Cyanursäurederivat und/oder ein Isocyanursäurederivat ist, wobei das Polymersegment (E) durch Verwenden von mindestens 0,1 % und nicht mehr als 2 Gew.-% an Mercaptanen als Kettenübertragungsmittel, basierend auf dem ethylenisch ungesättigten Monomer (D), polymerisiert wird, wobei der Gehalt an den Monomeren, die das Polymersegment (C) formen, 1 bis 5 Gew.-% beträgt, basierend darauf, dass die Gesamtmenge an Siloxan und Monomereinheiten, die das Copolymer formen, als 100 Gew.-% definiert ist, und wobei eine Komponente, die in 2-Butanon löslich ist und in Methanol unlöslich ist, welche in dem Pfropfcopolymer enthalten ist, ein Gewichtsmittel des Molekulargewichts von mindestens 50.000 aufweist.

**2.** Das Pfropfcopolymer gemäß Anspruch 1, wobei das Pfropf Verhältnis des Pfropfcopolymers 1,001 bis 1,280 beträgt.

**3.** Das Pfropfcopolymer gemäß einem der Ansprüche 1 und 2, wobei eine Komponente, welche in 2-Butanon löslich ist und in Methanol unlöslich ist, welche in dem Pfropfcopolymer enthalten ist, eine reduzierte Viskosität von 0,01 bis 0,8 dl/g, gemessen unter der Bedingung einer Aceton Lösung von 0,2 g /100 $cm^3$ bei 30°C, aufweist.

**4.** Das Pfropfcopolymer gemäß einem der Ansprüche 1 bis 3, wobei eine Komponente, welche in 2-Butanon löslich ist und in Methanol unlöslich ist, welche in dem Pfropfcopolymer enthalten ist, ein Gewichtsmittel des Molekulargewichts von 1.000.000 oder weniger, bestimmt durch GPC, aufweist.

**5.** Ein Verfahren zur Herstellung eines Pfropfcopolymers, umfassend einen Schritt des Durchführens einer Salzcoagulation eines Latex, der das Pfropfcopolymer gemäß einem der Ansprüche 1 bis 4 enthält.

**6.** Das Verfahren zur Herstellung eines Pfropfcopolymers gemäß Anspruch 5, ferner umfassend einen Schritt des Waschens des Pfropfcopolymers nach der Salzcoagulation des Latex, der das Pfropfcopolymer enthält.

**7.** Das Verfahren zur Herstellung eines Pfropfcopolymers gemäß Anspruch 5, ferner umfassend einen Schritt des Verdünnens einer Dispersionsflüssigkeit, die das Pfropfcopolymer nach der Salzcoagulation des Latex enthält, der das Pfropfcopolymer enthält.

8. Ein Verfahren zur Herstellung eines Pfropfcopolymers, ferner umfassend die Schritte Waschen des Pfropfcopolymers, und/oder Zugeben eines zwei- oder höherwertigen Metallsalzes nach dem Sprühtrocknen eines Latex, der das Pfropfcopolymer gemäß einem der Ansprüche 1 bis 4 enthält.

9. Eine Harzzusammensetzung enthaltend ein Pfropfcopolymer, umfassend das Pfropfcopolymer gemäß einem der Ansprüche 1 bis 4 und mindestens eines, ausgewählt aus der Gruppe bestehend aus einem thermoplastischen Harz, einem duroplastischen Harz und einem Elastomer.

10. Die Harzzusammensetzung enthaltend ein Pfropfcopolymer gemäß Anspruch 9, wobei das thermoplastische Harz mindestens eines, ausgewählt aus Polycarbonatharzen; Polyesterharzen; Polyestercarbonatharzen; Polyphenylenetherharzen; Polyphenylensulfidharzen; Polysulfonharzen; Polyethersulfonharzen; Polyarylenharzen; Polyamidharzen; Polyetherimidharzen; Polyacetalharzen; Polyvinylacetalharzen; Polyketonharzen; Polyetherketonharzen; Polyetheretherketonharzen; Polyarylketonharzen; Polyethemitrilharzen; Flüssigkristallharzen; Polybenzimidazolharzen; Polyparabansäureharzen; Vinylpolymer- oder copolymerharzen, jeweils hergestellt durch Polymerisieren oder Copolymerisieren mindestens eines Vinylmonomers, ausgewählt aus der Gruppe bestehend aus aromatischen Alkenylverbindungen, Methacrylestern, Acrylestern und Vinylcyanidverbindungen; Copolymerharzen aus Dien-aromatischer Alkenylverbindung; Copolymerharzen aus Vinylcyanid-Dien-aromatischer Alkenylverbindung; Copolymerharzen aus aromatischer Alkenylverbindung- Dien-Vinylcyanid-N-Phenylmaleimid; Copolymerharzen aus Vinylcyanid-(Ethylen-Dien-Propylen (EPDM))-aromatischer Alkenylverbindung; Polyolefinen; Vinylchloridharzen; und chlorierten Vinylchloridharzen, ist.

11. Die Harzzusammensetzung enthaltend ein Pfropfcopolymer gemäß Anspruch 9, wobei das duroplastische Harz mindestens eines, ausgewählt aus phenolischen Harzen, Epoxidharzen, Harnstoffharzen, Melaminharzen, Polyimidharzen, Polyamid-Imid Harzen, duroplastischen Polyesterharzen, Alkydharzen, Siliconharzen, Urethanharzen, Polyvinylesterharzen, Poly(diallylphthalat)harzen, Bismaleimid-Triazinharzen, Furanharzen, Xylolharzen, Guanaminharzen, Maleinharzen, und Dicyclopentadienharzen, ist.

12. Die Harzzusammensetzung enthaltend ein Pfropfcopolymer gemäß Anspruch 9, wobei das Elastomer mindestens eines, ausgewählt aus Naturkautschuken und synthetischen Kautschuken, ist.

13. Die Harzzusammensetzung enthaltend ein Pfropfcopolymer gemäß Anspruch 10, umfassend ein aromatisches Polycarbonat.

14. Die Harzzusammensetzung enthaltend ein Pfropfcopolymer gemäß Anspruch 13, ferner umfassend ein Schwefel enthaltendes, metallorganisches Salz.

15. Die Harzzusammensetzung enthaltend ein Pfropfcopolymer gemäß einem der Ansprüche 9 bis 14, ferner umfassend ein Antioxidans.

**Revendications**

1. Copolymère greffé contenant un polyorganosiloxane pouvant être obtenu en formant un segment de polymère (C) en polymérisant un monomère multifonctionnel contenant un atome d'azote (B) ayant deux ou plusieurs groupes polymérisables par polymérisation radicalaire dans sa molécule seul ou sous forme d'un mélange contenant un autre monomère copolymérisable avec le monomère (B), où la teneur du monomère (B) dans le mélange est au moins 80 % en poids, en au moins un stade en présence d'un polyorganosiloxane (A), et en formant en outre un segment de polymère (E) en polymérisant un monomère éthyléniquement insaturé (D) dont l'homopolymère a une température de transition vitreuse de 40°C ou plus, où la teneur du segment de polyorganosiloxane (A) est 65 % en poids ou plus sur la base du copolymère greffé, où le monomère contenant un atome d'azote (B) est un dérivé de l'acide cyanurique et/ou un dérivé de l'acide isocyanurique, où le segment de polymère (E) est polymérisé en utilisant au moins 0,1 % et pas plus de 2 % en poids de mercaptans comme agent de transfert de chaîne sur la base du monomère éthyléniquement insaturé (D), où la teneur des monomères constituant le segment de polymère (C) est 1 à 5 % en poids sur la base de ce que la quantité totale des unités siloxanes et monomères qui constituent le copolymère est définie comme étant 100 % en poids, et où un composant soluble dans la 2-butanone et insoluble dans le méthanol, qui est contenu dans le copolymère greffé, à une masse moléculaire moyenne en poids d'au moins 50 000.

**2.** Copolymère greffé selon la revendication 1 où le taux de greffe du copolymère greffé est 1,001 à 1,280.

**3.** Copolymère greffé selon l'une quelconque des revendications 1 et 2 où un composant soluble dans la 2-butanone et insoluble dans le méthanol, qui est contenu dans le copolymère greffé, a une viscosité réduite de 0,01 à 0,8 dl/g mesurée dans une condition d'une solution dans l'acétone de 0,2 g/100 $cm^3$ à 30°C.

**4.** Copolymère greffé selon l'une quelconque des revendications 1 à 3 où un composant soluble dans la 2-butanone et insoluble dans le méthanol, qui est contenu dans le copolymère greffé, a une masse moléculaire moyenne en poids de 1 000 000 ou moins, déterminée par CPG.

**5.** Procédé pour produire un copolymère greffé comprenant une étape de mise en oeuvre d'une coagulation par sel d'un latex contenant le copolymère greffé selon l'une quelconque des revendications 1 à 4.

**6.** Procédé pour produire un copolymère greffé selon la revendication 5 comprenant en outre une étape de lavage du copolymère greffé après la coagulation par sel du latex contenant le copolymère greffé.

**7.** Procédé pour produire un copolymère greffé selon la revendication 5 comprenant en outre une étape de dilution d'un liquide de dispersion contenant le copolymère greffé après la coagulation par sel du latex contenant le copolymère greffé.

**8.** Procédé pour produire un copolymère greffé comprenant en outre des étapes de lavage du copolymère greffé, et/ou d'addition d'un sel métallique divalent ou de valence supérieure après le séchage par pulvérisation d'un latex contenant le copolymère greffé selon l'une quelconque des revendications 1 à 4.

**9.** Composition de résine contenant un copolymère greffé, comprenant le copolymère greffé selon l'une quelconque des revendications 1 à 4 et au moins un choisi dans le groupe consistant en une résine thermoplastique, une résine thermodurcissable et un élastomère.

**10.** Composition de résine contenant un copolymère greffé selon la revendication 9 où la résine thermoplastique est au moins une choisi parmi les résines de polycarbonate ; les résines de polyester ; les résines de polyestercarbonate ; les résines de poly(éther de phénylène) ; les résines de poly(sulfure de phénylène) ; les résines de polysulfone ; les résines de polyéthersulfone ; les résines de polyarylène ; les résines de polyamide ; les résines de polyétherimide ; les résines de polyacétal ; les résines de polyvinylacétal ; les résines de polycétone ; les résines de polyéthercétone ; les résines de polyétheréthercétone ; les résines de polyarylcétone ; les résines de polyéthernitrile ; les résines cristallines liquides ; les résines de polybenzimidazole ; les résines de poly(acide parabanique) ; les résines de polymère ou copolymère vinylique préparées chacune en polymérisant ou copolymérisant au moins un monomère vinylique choisi dans le groupe consistant en les composés alcényle aromatiques, les esters méthacryliques, les esters acryliques et les composés cyanure de vinyle ; les résines de copolymère diène-composé alcényle aromatique ; les résines de copolymère cyanure de vinyle-diène-composé alcényle aromatique ; les résines de copolymère composé alcényle aromatique-diène-cyanure de vinyle-N-phénylmaléimide ; les résines de copolymère cyanure de vinyle-(éthylène-diène-propylène (EPDM))-composé alcényle aromatique ; les polyoléfines ; les résines de chlorure de vinyle ; et les résines de chlorure de vinyle chloré.

**11.** Composition de résine contenant un copolymère greffé selon la revendication 9 où la résine thermodurcissable est au moins une choisie parmi les résines phénoliques, les résines époxydes, les résines d'urée, les résines de mélamine, les résines de polyimide, les résines de polyamide-imide, les résines de polyester thermodurcissables, les résines alkydes, les résines de silicone, les résines d'uréthane, les résines de polyvinylester, les résines de poly (phtalate de diallyle), les résines de bismaléimide-triazine, les résines de furane, les résines de xylène, les résines de guanamine, les résines maléiques et les résines de dicyclopentadiène.

**12.** Composition de résine contenant un copolymère greffé selon la revendication 9 où l'élastomère est au moins un choisi parmi les caoutchoucs naturels et les caoutchoucs synthétiques.

**13.** Composition de résine contenant un copolymère greffé selon la revendication 10, comprenant un polycarbonate aromatique.

**14.** Composition de résine contenant un copolymère greffé selon la revendication 13 comprenant en outre un sel organométallique contenant du soufre.

**15.** Composition de résine contenant un copolymère greffé selon l'une quelconque des revendications 9 à 14 comprenant en outre un antioxydant.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 60252613 A
- JP 2003238639 A
- EP 1505123 A1
- JP 2000226420 A
- JP 2000834392 A
- US 2891920 A
- US 3294725 A
- JP 63202630 A
- JP 63202631 A
- JP 4258636 A
- JP 60088040 A
- WO 03068835 A
- US 4600436 A
- JP 2002249582 A
- JP 2002121284 A
- JP 11222554 A
- JP 2001288269 A
- JP 2001106787 A

### Non-patent literature cited in the description

- Polymer Handbook. John Wiley & Sons Ltd, 1999